# EUROPÄISCHE PATENTSCHRIFT

(11) **EP 3 871 909 B1**
(45) Veröffentlichungstag und Bekanntmachung des Hinweises auf die Patenterteilung: **07.01.2026**
(21) Anmeldenummer: 21154267.5
(22) Anmeldetag: 29.01.2021
(51) Int. Cl.: B60G 3/01

(54) **MOBILE LANDMASCHINE**
MOBILE AGRICULTURAL MACHINE
MACHINE AGRICOLE MOBILE

(30) Priorität: 28.02.2020 DE 102020105378
(43) Veröffentlichungstag der Anmeldung: 01.09.2021
(73) Patentinhaber: HORSCH LEEB Application Systems GmbH, 94405 Landau an der Isar (DE)
(72) Erfinder: Zink, Florian, 94405 Landau an der Isar (DE)
(74) Vertreter: v. Bezold & Partner Patentanwälte - PartG mbB

(56) Entgegenhaltungen:
- WO-A1-2017/040847
- US-A1- 2015 102 568
- US-A1- 2019 176 560

## Beschreibung

Die Erfindung betriff eine mobile Landmaschine mit einer lenkbaren Einzelradaufhängung.

Die EP 2 965 928 A1 offenbart eine Einzelradaufhängung für ein lenkbares Rad eines landwirtschaftlichen Zug-, Transport- oder Spezialfahrzeuges. Die Einzelradaufhängung umfasst eine Lenksäule, die über eine Gabelbrücke mit einer in ungefähr vertikale Richtung beweglichen Linearführung zusammenwirkt. Die Gabelbrücke ist um eine ungefähr vertikal verlaufende Drehachse schwenkbar. Weiter ist die Linearführung mit einem fluidischen Dämpfungselement gekoppelt, das einen tragenden Bestandteil der Gabelbrücke bildet. Das Dämpfungselement umfasst einen Dämpfungszylinder, der als Lenksäule ausgebildet ist. Weiter weist das Dämpfungselement ein oder mehrere Druckreservoirs mit Anschlüssen auf, wobei die Druckreservoirs über Leitungssysteme fluidisch mit dem Dämpfungszylinder verbunden sind.

Die US 7,574,926 B2 offenbart eine Anordnung zur Erfassung des Wellenwinkels für eine lenkbare Einzelradaufhängung.

Die WO 2017/040847 A1 offenbart ein Aufhängungsmodul zur Abstützung eines Fahrzeugchassis umfassend einen Modulrahmen, der schwenkbar mit einer Achse auf dem Chassis verbunden ist, und einen Radkasten, der an dem Rad montiert und durch Strebenstangen gleitend mit dem Modulrahmen verbunden ist. Der Radkasten und der Modulrahmen schwenken gemeinsam in Bezug auf das Fahrgestell, und der Modulrahmen ist so konfiguriert, dass er sich zwischen einer Standardposition und einer Position mit großem Abstand in Bezug auf den Radkasten bewegt. Das Aufhängungsmodul umfasst einen Stellantrieb, der mit dem Modulrahmen gekoppelt ist, um den Rahmen zwischen den Betriebspositionen zu verschieben.

Die US 2015/102568 A1 offenbart eine Baugruppe zur Abstützung eines Fahrzeugchassis an einem Rad des Fahrzeugs umfassend eine Radbefestigungskomponente zur Befestigung der Baugruppe an dem Rad, eine Chassisbefestigungskomponente zur Befestigung der Baugruppe an dem Fahrzeugchassis und eine Aufhängungskomponente. Mindestens ein Einstellelement ist mit der Fahrgestellbefestigungskomponente und mit einem ersten Teil der Aufhängungskomponente gekoppelt und so konfiguriert, dass es den ersten Teil der Aufhängungskomponente zwischen einer Vielzahl von Betriebspositionen relativ zur Chassisbefestigungskomponente verschiebt.

Die WO 2017/040847 A1 offenbart ein Radaufhängungsmodul zur Stützung eines Fahrzeugfahrgestells. Das Radaufhängungsmodul umfasst einen Modulrahmen, der schwenkbar mit einer Achse des Fahrgestells verbunden ist, und einen Radkasten, der an dem Rad angebracht ist und über Strebestangen gleitend mit dem Modulrahmen verbunden ist. Der Radkasten und der Modulrahmen schwenken gemeinsam in Bezug auf das Fahrgestell, und der Modulrahmen ist so ausgebildet, dass er sich zwischen einer Standardposition und einer Position mit großem Freiraum in Bezug auf den Radkasten bewegt. Das Radaufhängungsmodul umfasst ferner einen Einstellantrieb, der mit dem Modulrahmen gekoppelt ist, um den Rahmen zwischen den Betriebspositionen zu verschieben. Die Federbeinstangen bewegen sich von einer ersten Position, in der sich die unteren Enden der ersten und zweiten Federbeinstangen unterhalb des Radkastens befinden, wenn sich der Modulrahmen in der Standardposition befindet, in eine zweite Position, in der sich die unteren Enden in einer höheren Position relativ zur ersten Position befinden, wenn sich der Modulrahmen in der Position mit großem Freiraum befindet.

Die US 2019/176560 A1 offenbart eine mobile Landmaschine entsprechend dem Oberbegriff des Anspruchs 1 und beschreibt ein Aufhängungssteuersystem zur dynamischen Einstellung von Kolben, die sich in der Nähe der Räder einer landwirtschaftlichen Maschine befinden, um die Reifendurchbiegung oder -verformung bei unterschiedlichen Lasten zu berücksichtigen. Aus Druckmessungen an der Maschine lassen sich Knick-, Nick-, Roll- und/oder Maschinenhöhe bestimmen, um solche Reifenhöhenkorrekturen vorzunehmen. Bei Sprühgeräten ermöglicht dies die Steuerung des Abstandes und der Aufhängungshöhe, um das Gestänge parallel zum Boden zu halten und Schäden zu vermeiden.

Der Erfindung liegt die Aufgabe zu Grunde, eine alternative und/oder verbesserte Einzelradaufhängung zu schaffen.

Die Aufgabe wird gelöst durch die Merkmale des unabhängigen Anspruchs. Vorteilhafte Weiterbildungen sind in den abhängigen Ansprüchen und der Beschreibung angegeben.

Erfindungsgemäß wird eine mobile Landmaschine (z. B. Feldspritze, Düngerstreuer, Zugfahrzeug oder Anhänger) bereitgestellt, die eine lenkbare Einzelradaufhängung aufweist. Die Einzelradaufhängung weist eine Tragvorrichtung zur schwenkbaren Lagerung der Einzelradaufhängung an einem Rahmenteil der Landmaschine auf. Die Einzelradaufhängung weist mindestens eine Führungssäule auf, die in der Tragvorrichtung verschiebbar gelagert ist. Die Einzelradaufhängung weist eine Radnabe auf, die verschiebbar entlang der mindestens einen Führungssäule geführt ist. Die Einzelradaufhängung weist einen Träger (z. B. Querträger und/oder Hubbrücke) auf, der fest mit der mindestens einen Führungssäule zum Bewegen mit der mindestens einen Führungssäule verbunden ist (z. B. kraftschlüssig, formschlüssig und/oder stoffschlüssig).

Der zusätzliche Trägerermöglicht eine verbesserte und flexiblere Anordnung von weiteren Komponenten der Einzelradaufhängung. Diese Komponenten können bspw. einerseits mit der Tragvorrichtung und andererseits mit dem Trägerverbunden sein. Diese Komponenten können bspw. auch einerseits mit dem Träger und andererseits mit der Radnabe verbunden sein. Da sich der Trägermit der mindestens einen Führungssäule bewegt, kann der Trägerrelativ zu der Tragvorrichtung bewegt werden, z. B. zum Ermöglichen einer Höhenverstellfunktion. Andererseits kann die Radnabe relativ zum Trägerbewegt werden, da die Radnabe an der mindestens einen Führungssäule geführt ist. So kann bspw. eine Dämpfungs- und/oder Federungsfunktion ermöglicht werden.

In einem Ausführungsbeispiel ist der Träger an der mindestens einen Führungssäule befestigt. Alternativ kann der Träger bspw. integral-einstückig mit der mindestens einen Führungssäule ausgebildet sein, vorzugsweise als Guss-, Schmiede- oder Schweißkonstruktion.

Erfindungsgemäß ist der Träger oberhalb der Radnabe angeordnet. Diese Anordnung kann besonders bauraumgünstig sein.

In einem weiteren Ausführungsbeispiel ist die mindestens eine Führungssäule in einer Aufnahme (z. B. Durchgangsloch) des Trägers eingespannt, vorzugweise an einem geschlitzten Ende des Trägers.

In einer Ausführungsform ist die Radnabe bewegbar mit dem Träger verbunden, und/oder der Träger ist bewegbar mit der Tragvorrichtung verbunden.

In einer weiteren Ausführungsform ist ein Abstand zwischen dem Träger und der Radnabe variabel, vorzugsweise zur Federung und/oder Dämpfung der Radnabe am Träger.

In einer weiteren Ausführungsform ist ein Abstand zwischen dem Träger und der Tragvorrichtung variabel, vorzugsweise zur Höheneinstellung der lenkbaren Einzelradaufhängung.

In einer Ausführungsvariante ist eine Relativbewegung zwischen dem Träger und der Radnabe unabhängig von einer Relativbewegung zwischen dem Träger und der Tragvorrichtung, und/oder ein variabler Abstand zwischen dem Träger und der Tragvorrichtung ist unabhängig von einem variablen Abstand zwischen dem Träger und der Tragvorrichtung. Damit kann ermöglicht werden, dass bspw. eine Höhenverstellung als Veränderung des Abstands zwischen der Tragvorrichtung und dem Träger keine Auswirkungen auf eine zwischen dem Träger und der Radnabe wirkende Federung und/oder Dämpfung hat. Die Federungseigenschaften und/oder die Dämpfungseigenschaften bleiben gleich, wenn eine Höhe der Einzelradaufhängung verstellt wird.

In einer weiteren Ausführungsvariante weist die Einzelradaufhängung ferner eine Federeinrichtung, vorzugweise einen (z. B. Luft-) Federbalg, die (z. B. direkt) an dem Träger befestigt ist, auf.

In einer Weiterbildung ist die Federeinrichtung zwischen dem Träger und der Radnabe angeordnet oder zwischen dem Träger und der Tragvorrichtung angeordnet.

In einem Ausführungsbeispiel verbindet die Federeinrichtung die Radnabe federnd mit dem Träger oder den Träger federnd mit der Tragvorrichtung.

In einem weiteren Ausführungsbeispiel ist die Federeinrichtung im Wesentlichen mittig bezüglich einer Länge des Trägers angeordnet, und/oder die Federeinrichtung ist unterhalb oder oberhalb des Trägers angeordnet.

Erfindungsgemäß weist die Einzelradaufhängung ferner mindestens eine Dämpfereinrichtung auf, die (z. B. direkt) an dem Träger befestigt ist.

In einer Weiterbildung ist die mindestens eine Dämpfereinrichtung im Wesentlichen parallel zu der mindestens einen Führungssäule angeordnet.

In einer weiteren Ausführungsform verbindet die mindestens eine Dämpfereinrichtung die Radnabe dämpfend mit dem Träger oder den Träger dämpfend mit der Tragvorrichtung.

In einer weiteren Ausführungsform weist die mindestens eine Dämpfereinrichtung einen Pneumatikzylinder, einen Hydraulikzylinder, einen Gasdruckdämpfer oder einen Stoßdämpfer auf.

In einer erfindungsgemäßen Variante ist die mindestens eine Dämpfereinrichtung außen auf einer in Fahrtrichtung (z. B. Vorwärtsfahrtrichtung oder Rückwärtsfahrtrichtung) gewandten Seite der lenkbaren Einzelradaufhängung angeordnet.

In einer anderen erfindungsgemäßen Variante sind zwei Dämpfereinrichtungen umfasst, die an entgegengesetzten Enden des Trägers befestigt sind.

Erfindungsgemäß weist die Einzelradaufhängung ferner mindestens eine Höhenverstelleinrichtung auf, die (z. B. direkt) an dem Träger befestigt ist.

In einer Weiterbildung ist die mindestens eine Höhenverstelleinrichtung im Wesentlichen parallel zu der mindestens einen Führungssäule angeordnet.

Erfindungsgemäß verbindet die mindestens eine Höhenverstelleinrichtung die Radnabe höhenverstellbar mit dem Träger.

Erfindungsgemäß weist die mindestens eine Höhenverstelleinrichtung mindestens einen Linearantrieb, einen Pneumatikzylinder, oder einen Hydraulikzylinder auf. In einem nicht erfindungsgemäßen Beispiel kann die mindestens eine Höhenverstelleinrichtung auch eine mechanische Höhenarretierung aufweisen.

In einem weiteren Ausführungsbeispiel ist die mindestens eine Höhenverstelleinrichtung außen an einer in Fahrtrichtung (z. B. Vorwärtsfahrtrichtung oder Rückwärtsfahrtrichtung) gewandten Seite der lenkbaren Einzelradaufhängung angeordnet ist.

Beispielsweise kann die mindestens eine Höhenverstelleinrichtung an einem Ende des Trägers befestigt sein. Sofern zwei Höhenverstelleinrichtung umfasst sind, können diese vorzugsweise an entgegengesetzten Enden des Trägers befestigt sein.

In einem weiteren Ausführungsbeispiel sind die mindestens eine Höhenverstelleinrichtung und die mindestens eine Dämpfereinrichtung auf gegenüberliegenden Seiten bezüglich des Trägers angeordnet, z. B. auf einer Oberseite und einer Unterseite.

Vorzugsweise kann sich der hierin verwendete Begriff "Steuereinheit" auf eine Elektronik (z. B. mit Mikroprozessor(en) und Datenspeicher) und/oder mechanische, hydraulische oder pneumatische Steuerung beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" bzw. "Steuern mit Rückkopplung" umfasst sein.

Weitere Einzelheiten und Vorteile der Erfindung werden im Folgenden unter Bezug auf die beigefügten Zeichnungen beschrieben. Es zeigen:
- Figur 1: eine perspektivische Ansicht einer mobilen Landmaschine;
- Figuren 2-4a: verschiedene Ansichten eines ersten Ausführungsbeispiels einer lenkbaren Einzelradaufhängung gemäß der vorliegenden Offenbarung (keine Ausführungsform der vorliegenden Erfindung), wobei Figur 4A ein Detail aus Figur 4 darstellt;
- Figuren 5, 6: Schnittansichten durch eine Lenksäule einer beispielhaften Einzelradaufhängung (keine Ausführungsform der vorliegenden Erfindung);
- Figur 7: eine Schnittansicht durch eine in der Spurbreite verstellbare Achse mit zwei lenkbaren Einzelradaufhängungen in einer ausgefahrenen Stellung (keine Ausführungsform der vorliegenden Erfindung);
- Figur 8: eine Schnittansicht durch die in der Spurbreite verstellbare Achse mit zwei lenkbaren Einzelradaufhängungen in einer eingefahrenen Stellung (keine Ausführungsform der vorliegenden Erfindung);
- Figuren 9-11: verschiedene Ansichten eines zweiten Ausführungsbeispiels einer lenkbaren Einzelradaufhängung gemäß der vorliegenden Offenbarung (keine Ausführungsform der vorliegenden Erfindung);
- Figuren 12-14: verschiedene Ansichten eines dritten Ausführungsbeispiels einer lenkbaren Einzelradaufhängung gemäß der vorliegenden Offenbarung;
- Figuren 15-17: verschiedene Ansichten eines vierten Ausführungsbeispiels einer lenkbaren Einzelradaufhängung gemäß der vorliegenden Offenbarung (keine Ausführungsform der vorliegenden Erfindung);
- Figuren 18-20: verschiedene Ansichten eines fünften Ausführungsbeispiels einer lenkbaren Einzelradaufhängung gemäß der vorliegenden Offenbarung (keine Ausführungsform der vorliegenden Erfindung); und
- Figuren 21-23: verschiedene Ansichten eines sechsten Ausführungsbeispiels einer lenkbaren Einzelradaufhängung gemäß der vorliegenden Offenbarung (keine Ausführungsform der vorliegenden Erfindung).

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

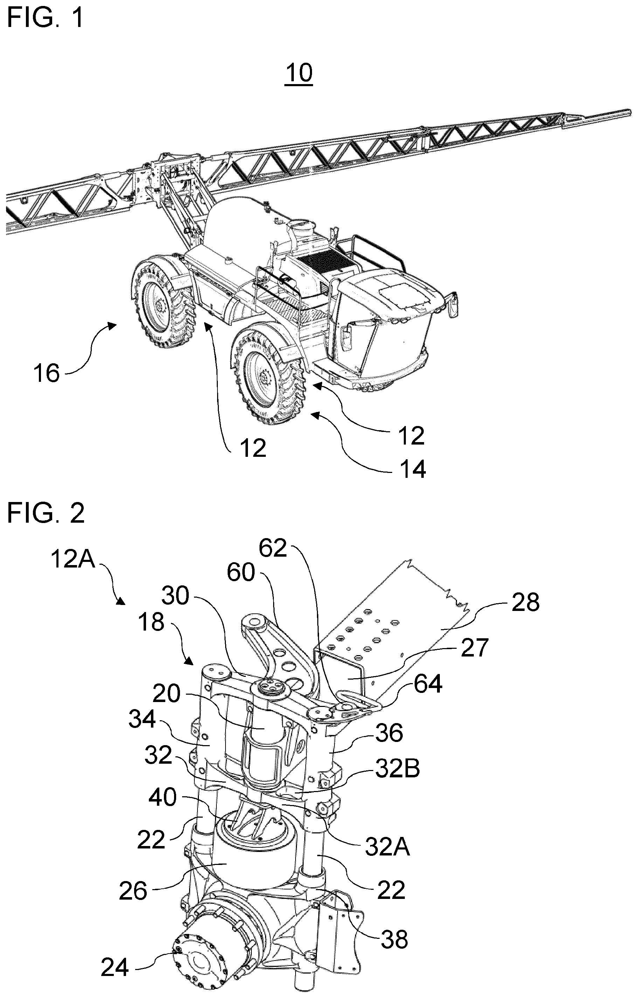

Die Figur 1 zeigt eine mobile Landmaschine 10. Die mobile Landmaschine 10 kann ein landwirtschaftliches Nutzfahrzeug, z. B. eine sogenannte Feldspritze sein, wie in Figur 1 dargestellt ist. Die mobile Landmaschine 10 kann allerdings auch anders ausgeführt sein, z. B. als ein Düngerstreuer, ein Zugfahrzeug oder ein Anhänger. Die mobile Landmaschine kann selbstfahrend oder mittels eines Zugfahrzeugs ziehbar sein. Die mobile Landmaschine 10 kann auch manuell und/oder automatisiert (z. B. teilautomatisiert oder vollautonom) betreibbar sein.

Die Landmaschine 10 weist mehrere lenkbare Einzelradaufhängungen 12 auf. Jeweils zwei Einzelradaufhängungen 12 können an einer Vorderachse 14 und/oder einer Hinterachse 16 der Landmaschine 10 angeordnet sein. Die Landmaschine 10 kann auch mehr oder weniger als zwei Achsen aufweisen. Die Einzelradaufhängungen 12 zumindest einer Achse 14 oder 16 sind gegenüber einem Rahmen der Landmaschine 10 lenkbar.

Die Achsen 14, 16 können je nach Ausführung spurbreitenverstellbar oder spurbreitenfest sein. D.h., es ist möglich, dass eine Spurbreite der Landmaschine 10 durch Verschieben der Einzelradaufhängungen 12 quer zur Fahrtrichtung nach außen verstellt werden kann, z. B. zur Anpassung an verschieden breite Fahrgassen und/oder um auf öffentlichen Straßen verkehren zu dürfen. Andererseits kann eine Spurbreite festgelegt sein. Ein Abstand zwischen den Einzelradaufhängungen 12 der Achse 14 und/oder der Achse 16 kann unveränderlich sein.

Die Einzelradaufhängung 12 kann je nach Ausführung höhenverstellbar oder nicht-höhenverstellbar sein. Bei einer höhenverstellbaren Einzelradaufhängung 12 kann dessen Relativhöhe zum Rahmen der Landmaschine 10 verstellt werden. Dadurch kann eine Bodenfreiheit unterhalb des Rahmens der Landmaschine 10 verändert werden, z. B. je nach Geländetopologie oder Pflanzenwachstum. Die Höhenverstellung kann bspw. mechanisch (z. B. mittels Arretierungselementen) und/oder mittels Linearantrieb (z. B. elektromagnetisch, elektromotorisch, hydraulisch, pneumatisch) erfolgen. Andererseits kann eine Höheneinstellung der Einzelradaufhängungen 12 fest sein.

Wenn die Einzelradaufhängung 12 eine Höhenverstellung aufweist, kann diese bspw. einen Höhenverstellbereich von 650 mm, 550 mm, 450 mm oder weniger aufweisen. Wenn eine hydraulische Höhenverstellung vorgesehen ist, kann diese vorzugsweise mittels Volumenstromregelung erfolgen. In Abhängigkeit von einer gewünschten Höhe der Einzelradaufhängung 12 kann den Hydraulikzylindern eine vorgegebene Menge an Hydraulikfluid, z. B. Öl, zugeführt werden und/oder von diesen abgeführt werden.

Es kann auch eine Hangnivellierung vorgesehen sein. Mittels eines Sensors der Landmaschine 10 kann erfasst werden, ob die Landmaschine 10 schräg steht, z. B. an einem Hang. Die höhenverstellbaren Einzelradaufhängungen 12 können unterschiedlich hoch verstellt werden, um die Landmaschine 10 zu nivellieren bzw. horizontal auszurichten, sofern möglich. Als Sensor kann bspw. ein Neigungssensor der Landmaschine 10 oder ein Drucksensor oder Wegsensor einer Federung und/oder Dämpfung der Landmaschine 10 verwendet werden.

Die Einzelradaufhängung 12 kann je nach Ausführung gefedert oder ungefedert sein, d.h. eine Federeinrichtung aufweisen oder nicht. Alternativ oder zusätzlich kann die Einzelradaufhängung 12 je nach Ausführung gedämpft oder ungedämpft sein, d.h. eine Dämpfeinrichtung aufweisen oder nicht.

Nachfolgend sind verschiedene Ausführungsbeispiele der Einzelradaufhängungen 12 im Detail beschrieben. Es wird darauf hingewiesen, dass einzelne Funktionen oder Merkmale der Ausführungsbeispiele der Einzelradaufhängungen 12A-12F untereinander austauschbar oder kombinierbar sind, sofern keine technischen Widersprüche auftreten. Insbesondere kann die Einzelradaufhängung 12 spurbreitenverstellbar oder nicht-spurbreitenverstellbar, höhenverstellbar oder nicht-höhenverstellbar, gefedert oder ungefedert und gedämpft oder ungedämpft sein.

Die Figuren 2 bis 4 zeigen ein erstes Ausführungsbeispiel für die Einzelradaufhängung (keine Ausführungsform der vorliegenden Erfindung), die mit dem Bezugszeichen 12A bezeichnet ist.

Die Einzelradaufhängung 12A weist eine Tragvorrichtung 18, zwei Führungssäulen 22, eine Radnabe 24 und eine Federeinrichtung 26 auf. Die Tragvorrichtung 18 kann auch als Gabelbrücke für die zwei Führungssäulen 22 bezeichnet werden. Die Einzelradaufhängung 12A ist schwenkbar mit einer Lenksäule 20 verbunden.

Die Tragvorrichtung 18 ist schwenkbar mit der Lenksäule 20 verbunden. Die Lenksäule 20 ist über ein Verschiebeteil 27 an einem Rahmenteil 28 der Landmaschine 10 angebracht. Die Lenksäule 20 und das Verschiebeteil 27 können bspw. miteinander verschweißt oder verschraubt sein. Die Anbringung am Rahmenteil 28 kann zur Veränderung einer Spurbreite der Landmaschine 10 in Querrichtung der Landmaschine 10 verschiebbar sein, wie in den Figuren 2 bis 4 dargestellt ist. Es ist jedoch auch möglich, dass eine feste Anbringung an dem Rahmenteil 28 umfasst ist. Auf dem Rahmenteil 28 können Aufbauten der Landmaschine 10 abgestützt werden, z. B. ein Fahrerhaus, ein Tank, ein Werkzeug usw. Die Tragvorrichtung 18 lagert die Führungssäulen 22.

Die Tragvorrichtung 18 kann unterschiedliche Formen aufweisen. Bevorzugt ist die Tragvorrichtung 18 rahmenförmig, vorzugsweise rechteck-rahmenförmig. Die Rahmenform ist gebildet durch einen ersten Querträger 30, einen zweiten Querträger 32, einen ersten Verbindungsträger 34 und einen zweiten Verbindungsträger 36. Die Verbindungsträger 34, 36 verbinden die Querträger 30, 32 jeweils an einander gegenüberliegen Enden.

Die Querträger 30, 32 sind im Wesentlichen horizontal ausgerichtet. Die Querträger 30, 32 sind bezüglich einer Vertikalrichtung voneinander beabstandet. Die Querträger 30, 32 verlaufen im Wesentlichen parallel zueinander. Der erste Querträger 30 ist oberhalb von dem zweiten Querträger 32 angeordnet. Der zweite Querträger 32 kann bezüglich einer Querachse der Landmaschine 10 weiter außen angeordnet sein als der erste Querträger 30.

Die Querträger 30, 32 sind als längliche Körper ausgeführt. Die Querträger 30, 32 können plattenförmig ausgeführt sein, wie beispielhaft für den ersten Querträger 30 in Figur 2 dargestellt ist. Die Querträger 30, 32 können jedoch auch zwei gegenüberliegende Gurte bzw. Bänder 32A, 32B aufweisen, die nur abschnittsweise miteinander verbunden sind, z. B. an den äußeren Enden und mittig, wie beispielhaft für den zweiten Querträger 32 in Figur 2 dargestellt ist.

Die Lenksäule 20 ist zwischen den Querträgern 30, 32 angeordnet. Der erste Querträger 30 und der zweite Querträger 32 sind jeweils drehbar bezüglich der Lenksäule 20 gelagert. Die Lenksäule 20 ist aufrecht ausgerichtet, z. B vertikal oder bevorzugt geneigt zur Vertikalen. Die Lenksäule 20 ist mittig zwischen den Verbindungsträgern 34, 36 angeordnet.

Die Tragvorrichtung 18 bildet durch die zweifache Drehlagerung der Lenksäule 20 somit eine zweischnittige Verbindung mit der Lenksäule 20 bzw. der Schwenkverbindung. Es besteht eine erste Scherrfläche im Bereich der Lagerung der Lenksäule 20 im ersten Querträger 30, nämlich unter dem ersten Querträger 30 und über der Lenksäule 20. Es besteht eine zweite Scherrfläche im Bereich der Lagerung der Lenksäule 20 im zweiten Querträger 32, nämlich unter der Lenksäule 20 und über dem zweiten Querträger 32.

Bevorzugt ist die Lenksäule 20 von der Tragvorrichtung 18 umrahmt. Die Tragvorrichtung 18 kann zwischen den Querträgern 30, 32 und den Verbindungsträgern 34, 36 eine Aufnahme bzw. einen Bauraum zur Anordnung der Lenksäule 20 schaffen. Der Bauraum kann vorzugsweise eine Höhe aufweisen, die mindestens einem Drittel oder einer Hälfte einer Gesamthöhe der Tragvorrichtung 18 entspricht. Der Bauraum kann eine Breite aufweisen, die mindestens einem Drittel oder einer Hälfte einer Gesamtbreite der Tragvorrichtung 18 entspricht. Der Bauraum kann bspw. rechteckig, vorzugsweise im Wesentlichen quadratisch sein.

Die Verbindungsträger 34, 36 sind aufrecht ausgerichtet, z. B. vertikal oder bevorzugt geneigt zur Vertikalen. Die Verbindungsträger 34, 36 sind bezüglich einer Horizontalrichtung voneinander beabstandet. Die Verbindungsträger 34, 36 können bezüglich einer Lenkachse der Lenksäule 20 symmetrisch zueinander ausgebildet sein. Ebenso vorgesehen sein kann, dass die Einzelradaufhängung 12A an sich in Bezug auf die Lenkachse einen im Wesentlichen symmetrischen Aufbau aufweist. Die Verbindungsträger 34, 36 sind als längliche Körper, bevorzugt Rohrkörper, ausgeführt. In den Verbindungsträgern 34, 36 ist jeweils eine der Führungssäulen 22 gelagert. Bei der Einzelradaufhängung 12A sind die Führungssäulen 22 fest bzw. unbeweglich in den Verbindungsträgern 34, 36 gelagert. Es ist auch möglich, dass die Führungssäulen 22 verschiebbar in den Verbindungsträgern 34, 36 gelagert sind. Die Führungssäulen 22 können beispielsweise in einem Sackloch oder Durchgangsloch der Verbindungsträgern 34, 36 gelagert sein. Die Führungssäulen 22 können kraftschlüssig (z. B. mittels Verschraubung), formschlüssig (z. B. mittels Nut-Feder-Verbindung) und/oder stoffschlüssig (z. B. mittels Verschweißen oder Verkleben) in den Verbindungsträgern 34, 36 gesichert sein.

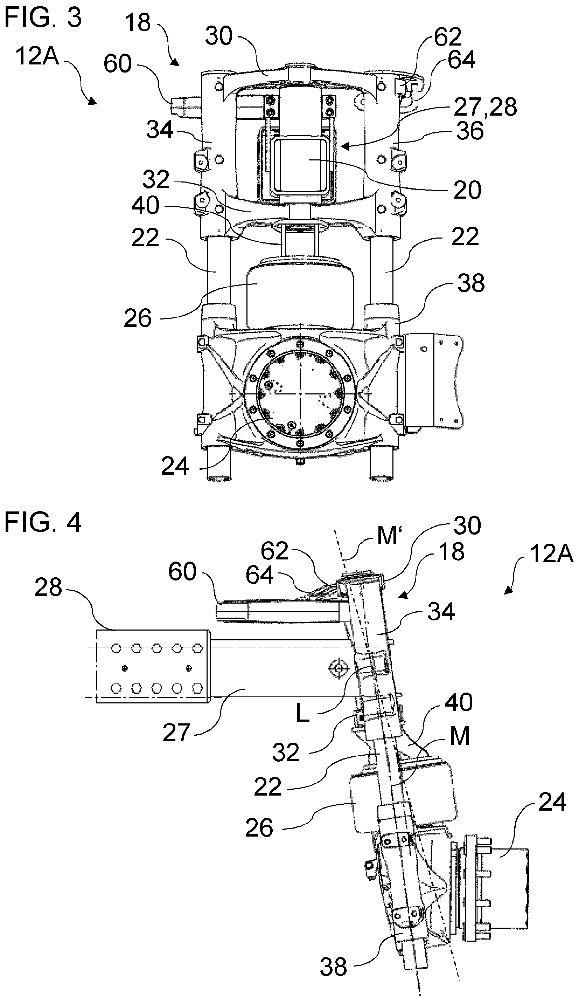

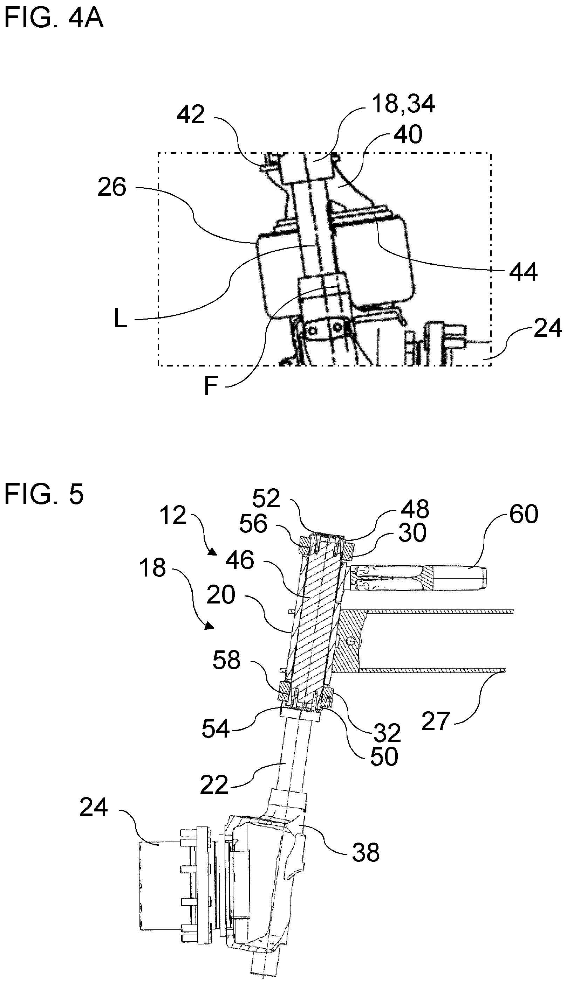

Figur 4 zeigt eine Mittellängsachse M einer der Führungssäulen 22 bzw. des Verbindungsträgers 34. Zudem ist eine Lenkachse L der Lenksäule 20 bzw. der Einzelradaufhängung 12A dargestellt. Die Führungssäulen 22, die Verbindungsträger 34, 36 und die Lenksäule 20 können so ausgerichtet sein, dass die Mittellängsachse M parallel zu der Lenkachse L ist. Es ist jedoch auch möglich, dass die Mittellängsachse (eingezeichnet als M' in Figur 4) windschief zur Lenkachse L ist. Die Mittellängsachse M' kann vorzugsweise schräger/geneigter zur Vertikalen verlaufen als die Lenkachse L. Ein Winkel zur Vertikalen kann bei der Mittellängsachse M' maximal ±25° oder maximal ±15° oder maximal ±5° größer sein als ein Winkel zur Vertikalen bei der Lenkachse L. Durch die unterschiedlichen Neigungen der Mittellängsachse M' und der Lenkachse L ist es möglich, dass ein Abstand zwischen den Führungssäulen 22 und der Radnabe 24 auf Höhe der Radnabe 24 verkleinert werden kann. Die Mittellängsachse M oder M' und die Lenkachse L können in Parallelebenen verlaufen, die parallel oder geneigt zu einer Querachse der Landmaschine 10 sein können.

Es ist möglich, dass beispielsweise nur ein Verbindungsträger und/oder nur eine Führungssäule umfasst ist. Beispielsweise kann die eine Führungssäule in dem einen Verbindungsträger gelagert sein, z. B. fest oder verschiebbar.

Die Tragvorrichtung 18 ist bevorzugt integral-einstückig ausgeführt. Vorzugweise können die Querträger 30, 32 und die Verbindungsträger 34, 36 integral-einstückig miteinander verbunden sein. Bspw. können die Querträger 30, 32 und die Verbindungsträger 34, 36 als eine gemeinsame Guss-, Schmiede-, Schweiß- und/oder Faserverbundkonstruktion ausgeführt sein. Als Gusswerkstoff kann beispielsweise Aluminium, eine Aluminiumlegierung, ein Leichtmetall, eine Leichtmetalllegierung, ein Gusseisen, eine Eisenlegierung oder ein Stahlguss und/oder ein Kunststoff verwendet werden.

Die Tragvorrichtung 18 bildet bevorzugt ein einteiliges Gehäuse für die Lagerung der Lenksäule 20 in den Querträgern 30, 32 und die Lagerung der Führungssäulen 22 in den Verbindungsträgern 34, 36.

Die Tragvorrichtung 18 kann weitere Flanschabschnitte zum Anbau weiteren Komponenten (z. B. Lenkzylinder, Höhenverstelleinrichtung, Federeinrichtung, Dämpfereinrichtung) aufweisen.

Es ist möglich, dass die Tragvorrichtung 18 bereichsweise mittels eines Verstärkungseinsatzes (z. B. Verschleißeinsatz, Gewindereinsatz) verstärkt ist. Vorzugsweise kann im Bereich der Lagerung der Lenksäule 20 und/oder der Führungssäulen 22 und/oder im Bereich von Flanschabschnitten zum Anbau weiteren Komponenten (z. B. Lenkzylinder, Höhenverstelleinrichtung, Federeinrichtung, Dämpfereinrichtung) mindestens ein Verstärkungseinsatz eingelegt, eingegossen, eingeschraubt oder dgl. sein.

Es ist auch möglich, dass im Bereich der Lagerung der Lenksäule 20 und/oder der Führungssäulen 22 ein Funktionseinsatz, der ein Verankerungs- und/oder Lagerelement zur Befestigung und/oder Führung bildet, angeordnet ist. Der Funktionseinsatz kann eingelegt, eingegossen, eingeschraubt oder dergl. sein. Der Funktionseinsatz kann bspw. eine Gewindehülse oder eine Lagerhülse sein. Der Funktionseinsatz kann aus einem metallischen Werkstoff und/oder aus Kunststoff gefertigt sein.

Aufgrund der bevorzugt integralen Einbettung des Verstärkungseinsatzes und/oder des Funktionseinsatzes in die Tragvorrichtung 18 sind in den Figuren keine Verstärkungseinsätze und Funktionseinsätze separat eingezeichnet und separat mit einem Bezugszeichen versehen.

Die Radnabe 24 ist, vorzugsweise gleitend, verschiebbar an den Führungssäulen 22 gelagert. Im Einzelnen kann ein Führungsschlitten 38 die Radnabe 24 verschiebbar an den Führungssäulen 22 lagern. Die Führungssäulen 22 führen den Führungsschlitten 38 und die Radnabe 24 beim Verschieben. Der Führungsschlitten 38 kann beispielsweise Durchgangslöcher aufweisen. Die Führungssäulen 22 können sich durch die Durchgangslöcher hindurch erstrecken. Der Führungsschlitten 38 kann in den Durchgangslöchern Führungsbuchsen oder Gleitlagerbuchsen aufweisen. Die Durchgangslöcher des Führungsschlittens 38 können mit den Aufnahmen der Verbindungsträger 34, 36 für die Führungssäulen 22 fluchten, wie dargestellt ist, oder versetzt dazu angeordnet sein (z. B. bzgl. einer Querachse der Landmaschine 10 und/oder bezüglich einer Längsachse der Landmaschine 10). Es ist somit auch möglich, dass die Führungssäulen 22 einen Knick o.Ä. aufweisen (nicht dargestellt).

Die Radnabe 24 kann einen Radnabenmotor aufweisen, z. B. einen elektrisch oder hydraulisch betriebenen Radnabenmotor. Der Führungsschlitten 38 kann bspw. gegossen sein und Flanschabschnitte zur Befestigung der Radnabe 24 und des Radnabenmotors aufweisen.

Bei der Einzelradaufhängung 12A ist die Radnabe 24 (mit dessen Führungsschlitten 38) mittels der Federeinrichtung 26 mit der Tragvorrichtung 18 verbunden. Der Führungsschlitten 38 weist eine Flanschfläche zur Befestigung der Federeinrichtung 26 auf. Die Federeinrichtung 26 ist bevorzugt direkt auf einer Oberseite des Führungsschlittens 38 montiert.

Die Federeinrichtung 26 ist zwischen der Tragvorrichtung 18 und dem Führungsschlitten 38 bzw. der Radnabe 24 angeordnet. Die Federeinrichtung 26 ist unterhalb der Lenksäule 20 und der Tragvorrichtung 18 angeordnet. Die Federeinrichtung 26 ist zwischen den Führungssäulen 22 angeordnet. Die Federeinrichtung 26 ist aufrecht ausgerichtet, z. B. vertikal oder bevorzugt geneigt zur Vertikalen.

Bei der Einzelradaufhängung 12A ist die Federeinrichtung 26 von unten an der Tragvorrichtung 18 befestigt. Die Befestigung erfolgt bspw. mittels eines Verbindungselements 40. Das Verbindungselement 40 kann zwischen einer Oberseite der Federeinrichtung 26 und einer Unterseite der Tragvorrichtung 18 angeordnet sein.

Die Federeinrichtung 26 verbindet die Tragvorrichtung 18 und die Radnabe 24 federnd. Beim Ein- und Ausfedern der Federeinrichtung 26 bewegt sich die Radnabe 24 mit dem Führungsschlitten 38 entlang der Führungssäulen 22 auf und ab.

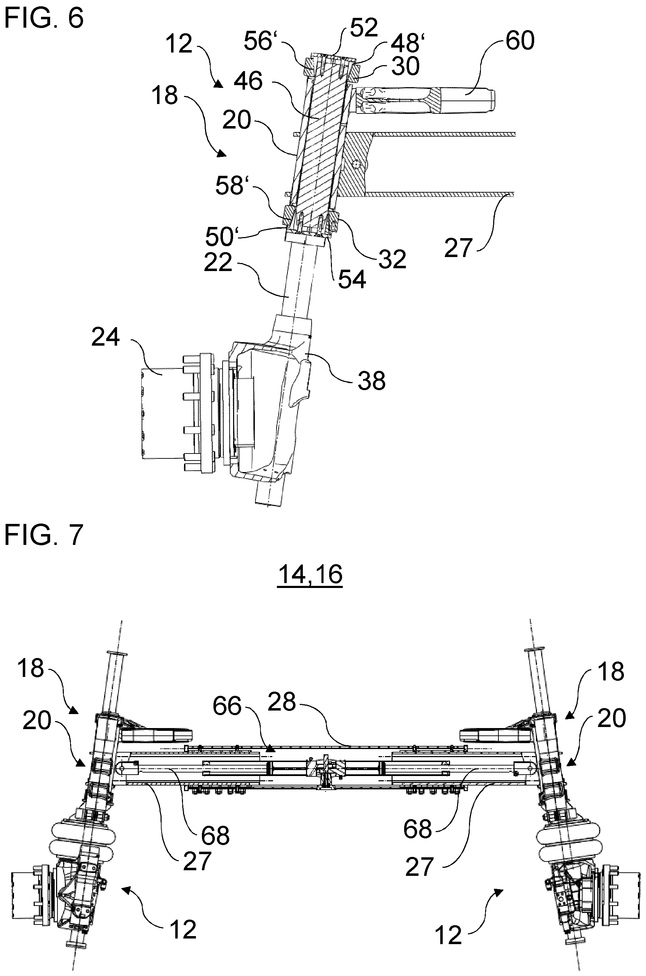

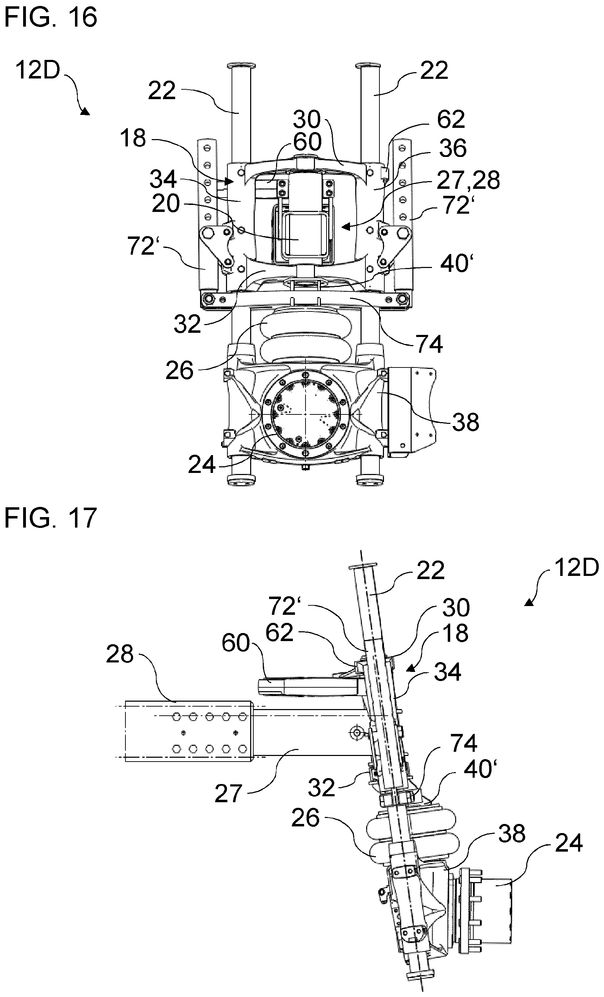

Die Federeinrichtung 26 ist bevorzugt als ein Federbalg, besonders bevorzugt als ein Luftfederbalg, ausgeführt. Zum Ermöglichen einer besonders geringen Bauhöhe kann der Federbalg bspw. als ein Zweifaltenbalg ausgeführt sein (beispielhaft dargestellt in den Figuren 7, 8 und 15 bis 20).

Es ist möglich, dass die Federeinrichtung 26 nicht nur eine Federungsfunktion für die Einzelradaufhängung 12A hat. Zusätzlich kann die Federeinrichtung 26 beispielsweise auch eine Höhenverstellung der Einzelradaufhängung 12A ermöglichen. Zum Erhöhen der Einzelradaufhängung 12A kann die Federeinrichtung 26 mit Luft aufgepumpt werden. Zum Absenken der Einzelradaufhängung 12A kann Luft aus der Federeinrichtung 26 abgelassen werden.

Eine Druckluftzufuhr und -abfuhr bezüglich der Federeinrichtung 26 kann mit einer Steuereinheit gesteuert werden. Die Steuereinheit kann entsprechende Ventile im oder stromauf/stromab der Federeinrichtung 26 öffnen, verstellen oder schließen. Die Federeinrichtung 26 kann mit variabel veränderbaren Drücken beaufschlagt werden.

Die Federeinrichtung 26 kann mit einem Niveauventil ausgestattet sein. Das Niveauventil kann derartig ausgeführt sein und/oder angesteuert werden, dass die Federeinrichtung 26 versucht, die gleiche Position zu halten bzw. anzufahren. Die Federeinrichtung 26 wird sozusagen immer auf die gleiche eingestellt. Alternativ zu einem Niveauventil wäre auch der Einsatz einer "intelligenten" Ventiltechnik denkbar, bspw. mit Druckerfassungssensorik und einer entsprechenden Ventileinrichtung.

Bevorzugt kann die Federeinrichtung 26 so ausgeführt und/oder angesteuert werden, dass sie einen progressiven Federkraftverlauf aufweist. Die Federkraft ist anfangs beim Einfedern oder Ausfedern der Federeinrichtung 26 zunächst gering. Die Federkraft steigt beim weiteren Einfedern oder Ausfedern an, z. B. konstant oder exponentiell.

In der Figur 4A ist eine bevorzugte Anordnung der Federeinrichtung 26 näher dargestellt. Eine Mittellängsachse F der Federeinrichtung 26 kann, wenn gewünscht, nicht-koaxial zur Lenkachse L sein. Die Mittellängsachse F kann beispielsweise parallel oder angewinkelt zu der Lenkachse L angeordnet sein. Bei einer parallelen Anordnung kann ein Abstand zwischen der Lenkachse L und der Mittellängsachse F zwischen 0 cm und 2 cm, 4 cm oder 10 cm sein. Es ist auch möglich, dass Abstand zwischen einem Mittelpunkt der Federeinrichtung 26 und der Lenkachse Lgrößer als 0 cm und/oder kleiner oder gleich 2 cm, 4 cm oder 10 cm ist. Bevorzugt ist die Federeinrichtung 26 in einer Querrichtung der Landmaschine 10 nach außen bezüglich der Lenkachse L versetzt angeordnet ist.

Die versetzte Anordnung der Federeinrichtung 26 gemäß der Figur 4A kann durch das Verbindungselement 40 ermöglicht werden. Das Verbindungselement 40 kann als Gestell ausgeführt sein. Das Verbindungselement 40 kann eine erste Flanschfläche 42 und eine zweite Flanschfläche 44 aufweisen. Die Flanschflächen 42, 44 können an entgegengesetzten Enden des Verbindungselements 40 angeordnet. Die Flanschflächen 42, 44 können entgegensetzt ausgerichtet und parallel zueinander sein. Mittels der ersten Flanschfläche 42 ist das Verbindungselement 40 an der Tragvorrichtung 18, vorzugsweise einer Unterseite des zweiten Querträgers 32, befestigt (z. B. kraftschlüssig, formschlüssig und/oder stoffschlüssig). Mittels der zweiten Flanschfläche 44 ist das Verbindungselement 40 an der Federeinrichtung 26, vorzugsweise einer Oberseite der Federeinrichtung 26, befestigt (z. B. kraftschlüssig, formschlüssig und/oder stoffschlüssig). Während die erste Flanschfläche 42 koaxial zur Lenkachse L ist, ist die zweite Flanschfläche 44 koaxial zur Mittellängsachse F. Die Flanschflächen 42, 44 können durch (Diagonal-)Streben miteinander verbunden sein.

Die Figuren 5 und 6 zeigen bevorzugte Ausführungen für die Schwenk- bzw. Drehlagerung der Lenksäule 20 in den Querträgern 30, 32.

Im Ausführungsbeispiel ist die Lenksäule 20 mittels eines Innenbolzens 46 schwenkbar mit den Querträgern 30, 32 verbunden. Die Lenksäule 20 weist ein Durchgangsloch bzw. die Form eines Hohlzylinders auf. Der Innenbolzen 46 ist im Durchgangsloch in der Lenksäule 20 angeordnet. Der Innenbolzen 46 und Lenksäule 20 sind relativ zueinander bewegbar. Der Innenbolzen 46 kann zum Lenken der Einzelradaufhängung 12 innerhalb der Lenksäule 20 gedreht werden. Beispielsweise können eine Außenmantelfläche des Innenbolzens 46 und eine Innenmantelfläche der Lenksäule 20 aneinander gleiten. Es ist auch möglich, dass eine separate Lagerbuchse bzw. ein separates Lager zwischen dem Innenbolzen 46 und der Lenksäule 20 angeordnet ist, zum Beispiel ein Gleitlager oder ein Wälzkörper-Lager.

Der Innenbolzen 46 lagert die Tragvorrichtung 18 schwenkbar/drehbar an der Lenksäule 20. Der Innenbolzen 46 ist an den Querträgern 30, 32 befestigt, vorzugsweise in Löchern der Querträger 30, 32. Vorzugsweise können entgegengesetzte Enden des Innenbolzens 46 an entgegengesetzten Enden der Lenksäule 20 überstehen. Die überstehenden Enden des Innenbolzens 46 sind in den Querträgern 30, 32 befestigt, vorzugsweise eingespannt. Zum Befestigen der überstehenden Enden des Innenbolzens 46 an den Querträgern 30, 32 kann ein Konussystem, vorzugsweise ein Doppelkonussystem, verwendet werden.

Die beiden Querträger 30, 32 sind somit an zwei Lagerstellen mittels des Innenbolzens 46 an der Lenksäule 20 gelagert. Die beiden Lagerstellen sind vertikal zueinander beabstandet, sodass die Lenksäule 20 aufrecht ausgerichtet ist, z. B. vertikal oder bevorzugt geneigt zur Vertikalen. Die Führungssäulen 22 können abschnittsweise auf Höhe der beiden Lagerstellen bzw. der beiden Querträger 30, 32 angeordnet sein.

Die Figur 5 zeigt ein Beispiel für ein Doppelkonussystem.

Der Innenbolzen 46 ist mittels zweier Spannbuchsen 48, 50 und zweier Spanneinrichtungen 52, 54 an den Querträgern 30, 32 befestigt.

Die Spannbuchsen 48, 50 weisen eine konusförmigen Innenumfang bzw. einen Innenkonus auf. Die Enden des Innenbolzens 46 weisen jeweils einen Außenkonus auf. Der Innenkonus der ersten Spannbuchse 48 liegt am Außenkonus eines ersten Endes des Innenbolzens 46 an. Die erste Spannbuchse 48 steht über das erste Ende des Innenbolzens 46 in einer Richtung weg von der zweiten Spannbuchse 50 über. Der Innenkonus der zweiten Spannbuchse 50 liegt am Außenkonus eines zweiten Endes des Innenbolzens 46 an. Die zweite Spannbuchse 50 steht über das zweite Ende des Innenbolzens 46 in einer Richtung weg von der ersten Spannbuchse 48 über.

Die erste Spannbuchse 48 ist in einem Loch (z. B. Durchgangsloch) 56 des ersten Querträgers 30 aufgenommen. Die zweite Spannbuchse 50 ist einem Loch (z. B. Durchgangsloch) 58 des zweiten Querträgers 32 aufgenommen. Die Spannbuchsen 48, 50 weisen bspw. zylindrische Außenumfänge auf, und die Löcher 56, 58 sind kreisrund.

Die Spanneinrichtungen 52, 54 können jeweils eine Spannplatte und mindestens eine Spanschraube aufweisen. Die Spannplatten stützen sich auf den Spannbuchsen 48, 50 ab. Die Spannschrauben erstrecken sich durch die Stützplatten. Köpfe der Spannschrauben stützen sich an den Spannplatten ab. Die Spannschrauben können in die Enden des Innenbolzens 46 eingeschraubt werden. Dadurch werden die Spannbuchsen 48, 50 weiter auf den Innenbolzen 46 geschoben. Die Spannbuchsen 48, 50 weiten sich. Ein Außendurchmesser der Spannbuchsen 48, 50 vergrößert sich. Mittels der Spannbuchsen 48 wird der Innenbolzen 46 somit in den Löchern 56, 58 eingeklemmt.

Es ist möglich, dass bspw. nur ein Ende des Innenbolzens 46 mittels einer Spannbuchse und einer Spanneinrichtung eingespannt ist und das andere Ende nicht (=Einfachkonussystem). Das andere Ende könnte bspw. auf eine andere Art und Weise am jeweiligen Querträger befestigt sein.

Es ist auch möglich, das Konussystem anders auszuführen, wie bspw. in der Figur 6 gezeigt ist.

Im Unterschied zum Ausführungsbeispiel von Figur 5 weist die erste Spannbuchse 48' einen zylindrischen Innenumfang und einen konusförmigen Außenumfang bzw. Außenkonus auf. Das Loch 56' des ersten Querträgers 30 weist einen Innenkonus auf.

Im Unterschied zum Ausführungsbeispiel von Figur 5 weist die zweite Spannbuchse 50' einen konusförmigen Außenumfang bzw. Außenkonus auf. Das Loch 58' des zweiten Querträgers 32 weist einen Innenkonus auf.

Es versteht sich, dass beliebige Kombinationen für die Doppelkonussysteme der Figuren 5 und 6 angewendet werden können. Die erste Spannbuchse 48' könnte auch wie die zweite Spannbuchse 50' oder die erste Spannbuchse 48 ausgeführt sein. Die zweite Spannbuchse 50' könnte auch wie die erste Spannbuchse 48' oder die zweite Spannbuchse 50 ausgeführt sein.

Unter Bezugnahme auf die Figuren 1 bis 6 ist nachfolgend die Lenkfunktion der Einzelradaufhängung 12 näher beschrieben.

Zum Lenken der Tragvorrichtung 18 bzw. der Einzelradaufhängung 10 kann ein Lenkzylinder, z. B. ein Hydraulikzylinder, ein Pneumatikzylinder oder ein anderer Linearantrieb, verwendet werden. Aus Übersichtsgründen ist der Lenkzylinder in den Figuren nicht dargestellt.

Der Lenkzylinder kann mit einem Ende an einem Lenkarm 60 und mit einem gegenüberliegenden Ende an der Tragvorrichtung 18 angebracht sein, vorzugsweise jeweils schwenkbar. Der Lenkarm 60 ist an der Lenksäule 20 und/oder dem Rahmenteil 28 befestigt. Bevorzugt kann der Lenkarm 60 die Lenksäule 20 zumindest abschnittsweise umgreifen und/oder direkt mit der Lenksäule 20 verschraubt sein. Der Lenkzylinder kann an einem Lenkzylinder-Flanschabschnitt 62 der Tragvorrichtung 18 angebracht sein. Bevorzugt ist der Lenkzylinder-Flanschabschnitt 62 an einer Oberseite der Tragvorrichtung 18, an einem Übergang zwischen dem ersten Querträger 30 und einem der Verbindungsträger 34, 36 und/oder an einem der Verbindungsträger 34, 36 angeordnet. Der Lenkzylinder-Flanschabschnitt 62 kann als ein Vorsprung ausgeführt, wie dargestellt ist.

Beim Ein- und Ausfahren des Lenkzylinders wird die Tragvorrichtung 18 um die Lenksäule 20 geschwenkt, sodass die Einzelradaufhängung 12 gelenkt wird.

Der Lenkarm 60 kann bevorzugt gebogen sein, z. B. in einer Richtung weg von dem Lenkzylinder-Flanschabschnitt 62. Hiermit kann bspw. mehr Bauraum für den Lenkzylinder zum Ermöglichen eines ausreichend großen Lenkwinkels zur Verfügung gestellt werden.

Bevorzugt können an der Tragvorrichtung 18 noch weitere Komponenten befestigbar sein. Beispielsweis kann an der Tragvorrichtung 18 noch eine Leitungsführung 64 zum Führen von Leitungen (z. B. Fluid- oder Elektroleitungen) entlang der Tragvorrichtung 18 angebracht sein. Die Leitung kann bspw. mittels eines vorzugsweise hakenförmigen Klammerelements der Leitungsführung 64 gehalten sein.

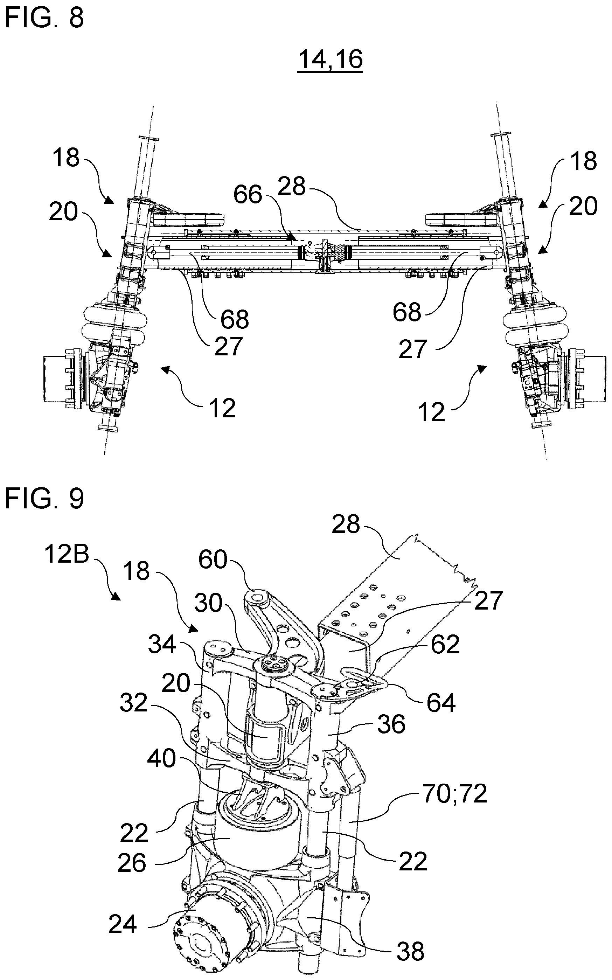

Die Figuren 7 und 8 zeigen, dass zwei Einzelradaufhängungen 12 einer Achse 14 oder 16 bezüglich einer Querachse der Landmaschine 10 verstellbar sein können. Somit kann eine Spurbreite der Landmaschine 10 angepasst werden.

Die Einzelradaufhängungen 12 können an einer Spurbreiteneinstelleinrichtung 66 bezüglich einer Querachse der Landmaschine 10 verschiebbar gelagert sein. Die Spurbreitenstelleinrichtung 66 ist bevorzugt jeweils an der Lenksäule 20 der Einzelradaufhängungen 12 befestigt. Beim Ein- und Ausfahren der Spurbreiteneinstelleinrichtung 66 werden die Lenksäulen 20 verschoben und damit die schwenkbar mit einer jeweiligen Lenksäule 20 verbundenen Tragevorrichtungen 18.

In Figur 7 ist die Spurbreiteneinstelleinrichtung 66 im ausgefahren Zustand zum Einstellen einer großen Spurbreite dargestellt. In Figur 8 ist die Spurbreiteneinstelleinrichtung 66 im eingefahrenen Zustand zum Einstellen einer kleinen Spurbreite dargestellt.

Die Spurbreiteneinstelleinrichtung 66 kann in dem Rahmenteil 28, vorzugsweise geschützt, aufgenommen und bspw. gleitend gelagert sein. Das Rahmenteil 28 kann hierfür eine Rohrform aufweisen, z. B. mit zumindest abschnittsweise rundem, eckigem und/oder abgeflachtem Querschnitt. Es ist auch möglich, die Spurbreiteneinstelleinrichtung 66 an dem Rahmenteil 28 zu befestigen, z. B. außen an dem Rahmenteil 28.

Die Spurbreiteneinstelleinrichtung 66 kann mindestens einen Linearantrieb 68 (z. B. Pneumatikzylinder oder Hydraulikzylinder) aufweisen. Der mindestens eine Linearantrieb 68 ist parallel zur Querachse der Landmaschine 10 ausgerichtet. Beispielsweise können ein- und ausfahrbare Kolben bzw. Kolbenstangen des Linearantriebs 68 trieblich mit der Lenksäule 20 zum Verschieben der Lenksäule 20 verbunden sein. Der Linearantrieb 68 ist zum Ein- und Ausfahren des Verschiebeteils 27, das an der Lenksäule 20 befestigt ist, angeordnet. Der Verschiebeteil 27 ist verschiebbar in oder an dem Rahmenteil 28 gelagert, insbesondere bezüglich einer Querachse der Landmaschine 10.

Wie bereits erwähnt, ist es jedoch auch möglich, dass eine Spurbreite der Landmaschine 10 nicht verstellbar ist. In diesem Fall können die Lenksäulen 20 an dem Rahmenteil 28 befestigt werden.

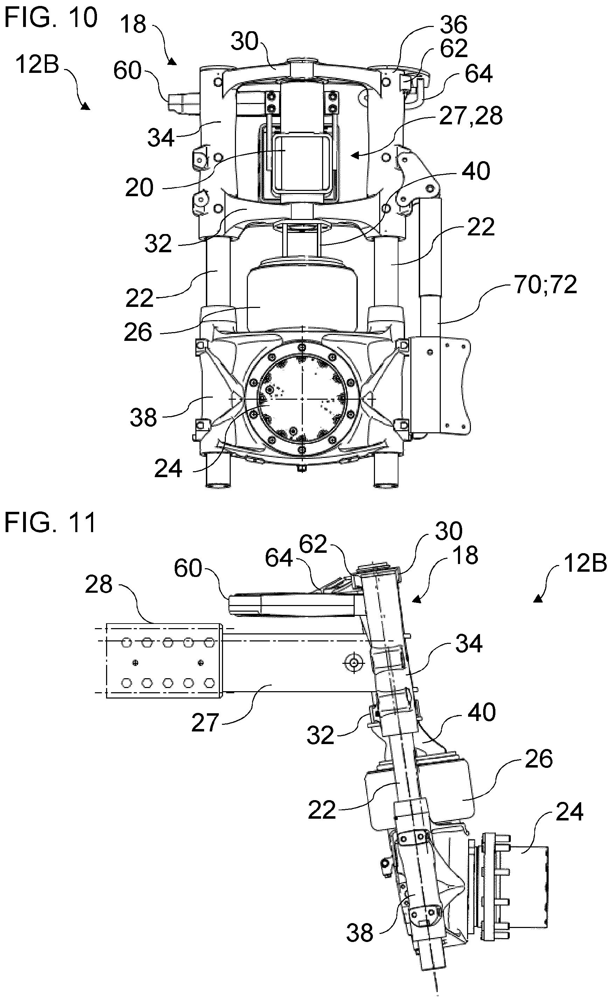

Die Figuren 9 bis 11 zeigen ein weiteres Ausführungsbeispiel für eine Einzelradaufhängung 12B (keine Ausführungsform der vorliegenden Erfindung). Die Einzelradaufhängung 12B der Figuren 9 bis 11 ist ähnlich zu der Einzelradaufhängung 12A der Figuren 2 bis 4A.

Ein Unterschied zu der Einzelradaufhängung 12A besteht darin, dass die Einzelradaufhängung 12B eine Dämpfereinrichtung 70 aufweist.

Die Dämpfereinrichtung 70 verbindet die Radnabe 24/den Führungsschlitten 38 gedämpft mit der Tragvorrichtung 18. Die Dämpfereinrichtung 70 kann parallel zur Lenkachse und/oder zu der mindestens einen Führungssäule 22 ausgerichtet sein. Beim Dämpfen kann die Radnabe 24 sich geführt an der mindestens einen Führungssäule 22 relativ zu der Tragvorrichtung 18 bewegen.

Die Dämpfereinrichtung 70 ist an einer in Fahrtrichtung (z. B. Vorwärtsfahrtrichtung oder Rückwärtsfahrtrichtung) gewandten Außenseite der Einzelradaufhängung 12B angeordnet. Ein erstes Ende der Dämpfervorrichtung 70 ist an dem Führungsschlitten 38 befestigt, vorzugsweise an einer in Fahrtrichtung (z. B. Vorwärtsfahrtrichtung oder Rückwärtsfahrtrichtung) gewandten Außenseite des Führungsschlittens 38. Ein entgegengesetztes zweites Ende der Dämpfervorrichtung 70 ist an der Tragvorrichtung 18 befestigt, vorzugsweise an einer in Fahrtrichtung (z. B. Vorwärtsfahrtrichtung oder Rückwärtsfahrtrichtung) gewandten Außenseite der Tragvorrichtung 18. Es ist auch möglich, dass die Dämpfereinrichtung 70 nicht an einer in Fahrtrichtung (z. B. Vorwärtsfahrtrichtung oder Rückwärtsfahrtrichtung) gewandten Außenseite der Einzelradaufhängung 12B angeordnet ist, sondern mittig auf einer Vorderseite oder Rückseite der Einzelradaufhängung 12B.

Es ist auch möglich, dass bspw. zwei Dämpfereinrichtungen 70 je Einzelradaufhängung 12B umfasst sind, z. B. eine Dämpfereinrichtung 70 auf einer in Vorwärtsfahrtrichtung gewandten Außenseite der Einzelradaufhängung 12B und eine Dämpfereinrichtung 70 auf einer in Rückwärtsfahrtrichtung gewandten Außenseite der Einzelradaufhängung 12B.

Die Dämpfereinrichtung 70 kann bspw. einen einfach- oder doppeltwirkenden Pneumatikzylinder, einen einfach- oder doppeltwirkenden Hydraulikzylinder, einen Linearantrieb und/oder einen Gasdruckdämpfer oder Stoßdämpfer zum Dämpfen von Schwingungen aufweisen. Je nach Ausführung kann die Dämpfereinrichtung 70 eine Ansteuerung (z. B. elektrische Ansteuerung und/oder Fluidansteuerung) benötigen oder nicht.

Es ist möglich, dass die Dämpfereinrichtung 70 nicht nur eine Dämpfungsfunktion für die Einzelradaufhängung 12B hat. Zusätzlich kann die Dämpfereinrichtung 70 beispielsweise auch eine Höhenverstellung der Einzelradaufhängung 12B ermöglichen. Um mittels der Dämpfereinrichtung 70 eine stoßdämpfende und höhenverstellbare Verbindung zu erreichen, ist es bspw. möglich, dass die Dämpfereinrichtung 70 als Fluidzylinder ausgeführt ist, vorzugsweise als doppeltwirkender Hydraulikzylinder und/oder Pneumatikzylinder. Ein erster Druckraum und ein zweiter Druckraum der Dämpfereinrichtung 70 können mittels einer Verbindungsleitung fluidisch verbunden sein. Der Verbindungsleitung kann ein Steuerventil, zur vorzugsweisen manuellen oder automatischen, Beeinflussung eines Volumenstromes zugeordnet sein. Das Steuerventil kann zweckmäßig ein Drosselrückschlagventil, Sperrventil, Druckregelventil und/oder Proportionalventil sein. Ein vereinfachter Aufbau kann erreicht werden, indem die Dämpfereinrichtung 70 ein Gehäuse mit einem ersten Druckraum und einem zweiten Druckraum aufweist, und die Verbindungsleitung und/oder das Steuerventil in dem Gehäuse integriert sind. Dadurch sind an der Dämpfereinrichtung 70 keine frei liegenden Verbindungsleitungen und/oder Ventile vorhanden, sondern lediglich nur noch Anschlüsse für die Fluidversorgung.

Zum Erhöhen der Einzelradaufhängung 12B kann bspw. ein Fluid zu der Dämpfereinrichtung 70 zugeführt werden. Zum Absenken der Einzelradaufhängung 12B kann das Fluid aus der Dämpfereinrichtung 70 abgeführt werden.

Eine Fluidzufuhr und -abfuhr bezüglich der Dämpfereinrichtung 70 kann mit einer Steuereinheit gesteuert werden. Die Steuereinheit kann entsprechende Ventile im oder stromauf/stromab der der Dämpfereinrichtung 70 öffnen, verstellen oder schließen. Die Dämpfereinrichtung 70 kann mit variabel veränderbaren Drücken beaufschlagt werden.

Anstelle der Dämpfereinrichtung 70 könnte bspw. auch eine Höhenverstelleinrichtung 72 umfasst sein.

Es ist möglich, dass für die Dämpfereinrichtung 70 und die Federeinrichtung 26 die gleiche Art von Stabilisator eingesetzt wird.

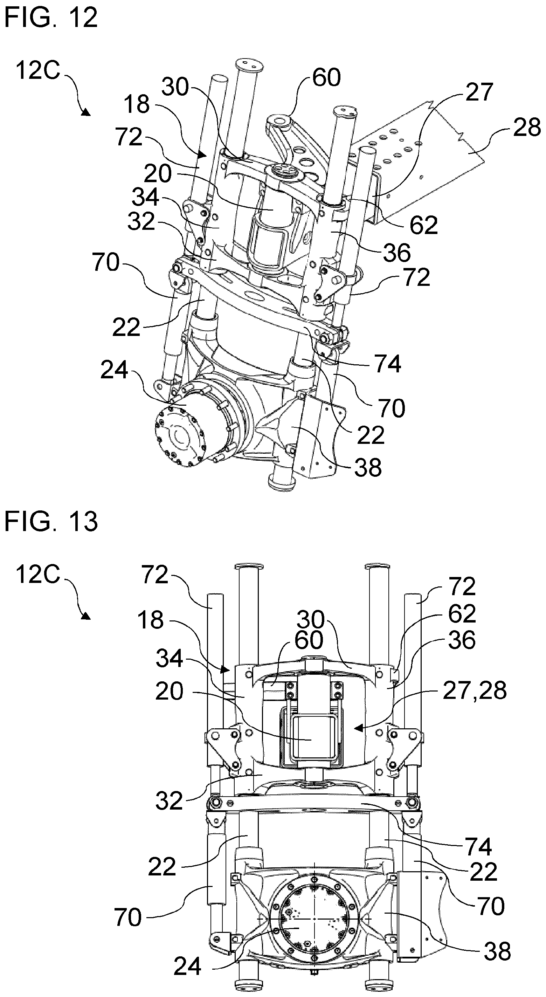

Die Figuren 12 bis 14 zeigen ein Ausführungsbeispiel für eine erfindungsgemäße Einzelradaufhängung 12C. Die Einzelradaufhängung 12C der Figuren 12 bis 14 ist ähnlich zu den Einzelradaufhängungen 12A (Figuren 2 bis 4A) und 12B (Figuren 9 bis 11).

Unterschiede zu den Einzelradaufhängungen 12A und 12B bestehen darin, dass die Einzelradaufhängung 12C keine Federeinrichtung, zwei Dämpfereinrichtungen 70, zwei Höhenverstelleinrichtungen 72, verschiebbare Führungssäulen 22' und einen zusätzlichen Träger 74 aufweist.

Die Führungssäulen 22' sind verschiebbar in den Verbindungsträgern 34, 36 gelagert. Die verschiebbare Lagerung der Führungssäulen 22' ermöglicht eine Höhenverstellbarkeit der Einzelradaufhängung 12C. Die Führungssäulen 22' können - je nach Höheneinstellung - nach oben hin und nach unten hin über die Tragvorrichtung 18, insbesondere die Verbindungsträger 34, 36, überstehen. Es ist auch möglich, dass bspw. nur eine Führungssäule 22' umfasst ist.

Die verschiebbare Lagerung der Führungssäulen 22' in der Tragvorrichtung 18 kann auf verschiedene Art und Weise erfolgen. Bspw. kann eine gleitende Verbindung zwischen einer Außenumfangsfläche der Führungssäulen 22' und einer Innenumfangsfläche von Aufnahmen (z. B. Durchgangslöcher) der Verbindungsträger 34, 36 bestehen. Die Querschnitte der Führungssäulen 22' und der Aufnahmen können entsprechend aneinander angepasst sein. Es ist auch möglich, dass separate Lagerelemente in den Aufnahmen der Verbindungsträger 34, 36 für die Führungssäulen 22' vorgesehen sind. Als Lagerelemente können bspw. Gleitlagerbuchsen verwendet werden. Bevorzugt ist je ein (langes) Lagerelement oder sind je zwei Lagerelemente je Führungssäule 22' umfasst, die an entgegengesetzten Enden der Aufnahme der Verbindungsträger 34, 36 angeordnet sind.

Bevorzugt ist eine Gesamtlänge der (Gleit-)Lagerfläche je Führungssäule 22' bezüglich einer Längsachse der jeweiligen Führungssäule 22' mindestens so groß wie ein Durchmesser der jeweiligen Führungssäule 22'. Hat bspw. die Führungssäule 22' einen Durchmesser von 80 mm, so weist deren Lagerfläche im Verbindungsträger 34 oder 36 (z. B. glatte Oberfläche oder mindestens eine Lagerbuchse) eine Länge von mindestens 80 mm auf.

Die Höhenverstelleinrichtungen 72 ermöglichen eine Höhenverstellung der Radnabe 24 relativ zur Tragvorrichtung 18. Die Höhenverstelleinrichtungen 72 sind parallel zu den Führungssäulen 22' ausgerichtet.

Die dargestellte Höhenverstelleinrichtung 72 weist einen Linearantrieb auf. Bevorzugt weist die Höhenverstelleinrichtung 72 zumindest einen einfach- oder doppeltwirkenden Fluidzylinder auf (z. B. Hydraulikzylinder und/oder Pneumatikzylinder). Die Höhenverstelleinrichtung 72 kann mindestens einen mittels einer Steuereinheit mit veränderbarem Druck und/oder mit einem veränderbaren Volumen eines Fluids (Volumenstromregelung) beaufschlagbaren Druckraum aufweisen, vorzugsweise jeweils einen ersten Druckraum und einen zweiten Druckraum aufweisen, welche jeweils unabhängig voneinander, mittels der Steuereinrichtung mit veränderbarem Druck und/oder mit einem veränderbaren Volumen eines Fluids, beaufschlagbar sind.

Eine erste Höhenverstelleinrichtung 72 ist an einer in Vorwärtsfahrtrichtung gewandten Außenseite der Einzelradaufhängung 12B angeordnet. Eine zweite Höhenverstelleinrichtung 72 ist an einer in Rückwärtsfahrtrichtung gewandten Außenseite der Einzelradaufhängung 12B angeordnet. Es ist auch möglich, dass bspw. nur eine Höhenverstelleinrichtung 72 je Einzelradaufhängung 12C umfasst ist.

Die Höhenverstelleinrichtungen 72 ist an der Tragvorrichtung 18 befestigt, vorzugsweise an einer in Fahrtrichtung (z. B. Vorwärtsfahrtrichtung oder Rückwärtsfahrtrichtung) gewandten Außenseite der Tragvorrichtung 18. Ein Ende der Höhenverstelleinrichtungen 72 ist zudem an dem Träger 74 befestigt, vorzugsweise weiter außen als die Führungssäulen 22'. Die Höhenverstelleinrichtungen 72 sind bevorzugt außen an entgegengesetzten Enden des Trägers 74 befestigt.

Die Höhenverstelleinrichtungen 72 verbinden die Tragvorrichtung 18 höhenverstellbar mit dem Träger 74. Beim Verstellen einer Höheneinstellung der Höhenverstelleinrichtungen 72 wird der Träger 74 relativ zur Tragvorrichtung 18 verstellt. Die Höhenverstelleinrichtungen 72 sind oberhalb von dem Träger 74 angeordnet.

Vorteilhaft kann die Höhenverstellbarkeit dazu führen, dass eine Baulänge der Einzelradaufhängung 12C nicht oder nur untergeordnet durch eine Länge der Führungssäulen 22' beschränkt ist. Führungssäulen, die nicht verschiebbar sind, können eine verkürzte Länge aufweisen, da diese sonst mit einer Radfelge des Rads kollidieren könnten, wenn die Einzelradaufhängung eine Bewegung federt und/oder dämpft. Die Höhenverstellbarkeit kann zudem den Vorteil haben, dass die Führungssäulen 22' vergleichsweise schräg zur Vertikalen ausgerichtet werden können. Dies kann wiederum die Momentkompensation durch die sich somit ergebenen kürzeren Hebellängen wesentlich verbessern.

Der Träger 74 ist fest mit den Führungssäulen 22' verbunden, z. B. kraftschlüssig, formschlüssig und/oder stoffschlüssig. Die Führungssäulen 22' können insbesondere in einer Aufnahme (z. B. Durchgangsloch) des Trägers 74 eingespannt sein, vorzugweise an geschlitzten Enden des Trägers 74. Der Träger 74 bewegt sich mit den Führungssäulen 22'. Der Träger 74 kann an den Führungssäulen 22' befestigt sein oder integral-einstückig mit der den Führungssäulen 22' ausgebildet sein, vorzugsweise als Guss-, Schmiede- oder Schweißkonstruktion.

Der Träger 74 ist separat zu der Tragvorrichtung 18 ausgebildet. Der Träger 74 ist mit den Führungssäulen 22' relativ zu der Tragvorrichtung 18 bewegbar. Der Träger 74 ist unterhalb der Tragvorrichtung 18 und oberhalb der Radnabe 24 angeordnet. Der Träger 74 ist parallel zu den Querträgern 30, 32 ausgerichtet.

Die Radnabe 24 ist an dem Träger 74 getragen, z. B. mittels der Dämpfereinrichtungen 70, wie in den Figuren 12 bis 14 dargestellt ist. Die Dämpfereinrichtungen 70 sind unterhalb von dem Träger 74 angeordnet. Die Dämpfereinrichtungen 70 einerseits und die Höhenverstelleinrichtungen 72 andererseits sind auf entgegengesetzten Seiten des Trägers 74 angeordnet.

Ein Ende der Dämpfereinrichtungen 70 ist an dem Träger 74 befestigt, vorzugsweise weiter außen als die Führungssäulen 22'. Die Dämpfereinrichtungen 70 sind bevorzugt außen an entgegengesetzten Enden des Trägers 74 befestigt.

Im Vergleich zu den dargestellten Varianten ist bei einer unter den Anspruchswortlaut fallenden Einzelradaufhängung die Anordnung der Höhenverstelleinrichtungen 72 und der Dämpfereinrichtungen 70 vertauscht. Die Höhenverstelleinrichtungen 72 können unterhalb des Trägers 74 angeordnet sein und den Träger 74 höhenverstellbar mit der Radnabe 24/dem Führungsschlitten 38 verbinden. Die Dämpfereinrichtungen 70 können oberhalb des Trägers 74 angeordnet sein und den Träger 74 gedämpft mit der Tragvorrichtung 18 verbinden.

Der Träger 74 ist somit bewegbar bezüglich der Tragvorrichtung 18 (z. B. zur Höhenverstellung mittels der Höhenverstelleinrichtungen 72) und bewegbar bezüglich der Radnabe 24 (z. B. zur Dämpfung mittels der Dämpfereinrichtungen 70 und/oder zur Federung (nicht dargestellt in den Figuren 12 bis 14)). Die Bewegungen können unabhängig voneinander ausgeführt werden. In anderen Worten, ein Abstand zwischen dem Träger 74 und der Radnabe 24 ist variabel, vorzugsweise zur Federung und/oder Dämpfung der Radnabe 24 am Träger 74 oder zur Höhenverstellung der Radnabe 24 am Träger 74. Ein Abstand zwischen dem Träger 74 und der Tragvorrichtung 18 ist ebenfalls variabel, vorzugsweise zur Höheneinstellung der lenkbaren Einzelradaufhängung 12C oder zur Federung und/oder Dämpfung des Trägers 74 an der Tragvorrichtung 18.

Die Anordnung des Trägers 74 ermöglicht so bspw., dass eine Höhenverstellung der Einzelradaufhängung mittels den Höhenverstelleinrichtungen 72 unabhängig von einer Dämpfung (und/oder einer Federung) der Einzelradaufhängung 12C erfolgen kann. Die Höhenverstellfunktionalität einerseits und die Federung und/oder Dämpfung andererseits sind bevorzugt auf entgegengesetzten Seiten des Trägers 74 realisiert. Dadurch, dass sich der Abstand zwischen der Tragvorrichtung 18 und dem Träger 74 und der Abstand zwischen dem Träger 74 und der Radnabe 24 unabhängig voneinander verändern können, weist die Federung und/oder Dämpfung unabhängig von der Höheneinstellung immer die gleichen Eigenschaften auf.

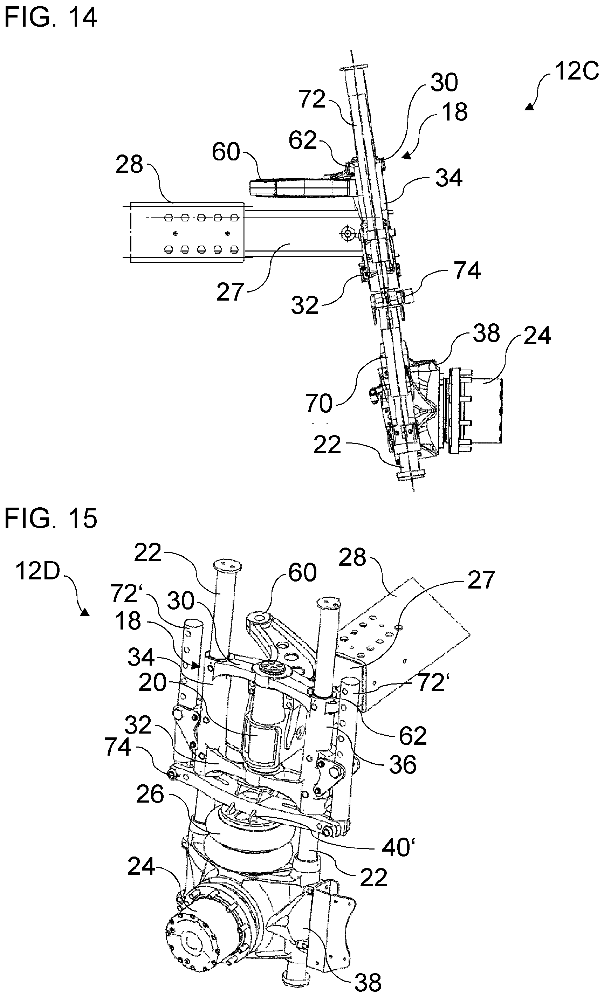

Die Figuren 15 bis 17 zeigen ein weiteres Ausführungsbeispiel für eine Einzelradaufhängung 12D (keine Ausführungsform der vorliegenden Erfindung). Die Einzelradaufhängung 12D der Figuren 15 bis 17 ist ähnlich zu der Einzelradaufhängung 12C der Figuren 12 bis 14.

Ein Unterschied zu der Einzelradaufhängung 12C besteht darin, dass die Einzelradaufhängung 12D keine Dämpfereinrichtungen 70, aber eine Federeinrichtung 26 aufweist.

Die Federeinrichtung 26 ist unterhalb des Trägers 74 angeordnet. Die Federeinrichtung 26 verbindet die Radnabe 24 federnd mit dem Träger 74. Das Verbindungselement 40' befestigt die Federeinrichtung 26 an dem Träger 74. Im Gegensatz zum Verbindungselement 40 der Einzelradaufhängungen 12A und 12B ist das Verbindungselement 40' der Einzelradaufhängung 12D nicht an der Tragvorrichtung 18 befestigt. Ansonsten kann die Federeinrichtung 26 der Einzelradaufhängung 12D bspw. wie die Federeinrichtung 26 der Einzelradaufhängungen 12A und 12B angeordnet und/oder ausgebildet sein.

Es ist auch möglich, dass die Federeinrichtung 26 oberhalb von dem Träger 74 zwischen dem Träger 74 und der Tragvorrichtung 18 angeordnet ist. Die Federeinrichtung 26 kann dann den Träger 74 federnd mit der Tragvorrichtung 18 verbinden.

Ein weiterer Unterschied zu der Einzelradaufhängung 12C besteht darin, dass die Höhenverstelleinrichtungen 72' bei der Einzelradaufhängung 12D beispielhaft als mechanische Arretierungen ausgebildet sind.

Die Höhenverstelleinrichtungen 72' können als Rohrkörper ausgeführt sein, die in Vertikalrichtung zueinander beabstandete Aufnahmen/Löcher aufweisen können. Je nach gewünschter Höheneinstellung kann die Tragvorrichtung 18 manuell an einer gewünschten Aufnahme der Höhenverstelleinrichtungen 72' befestigt werden, z. B. mittels Schrauben, Bolzen, Riegel usw. Ansonsten können die Höhenverstelleinrichtungen 72' der Einzelradaufhängung 12D bspw. wie die Höhenverstelleinrichtungen 72 der Einzelradaufhängung 12C angeordnet sein.

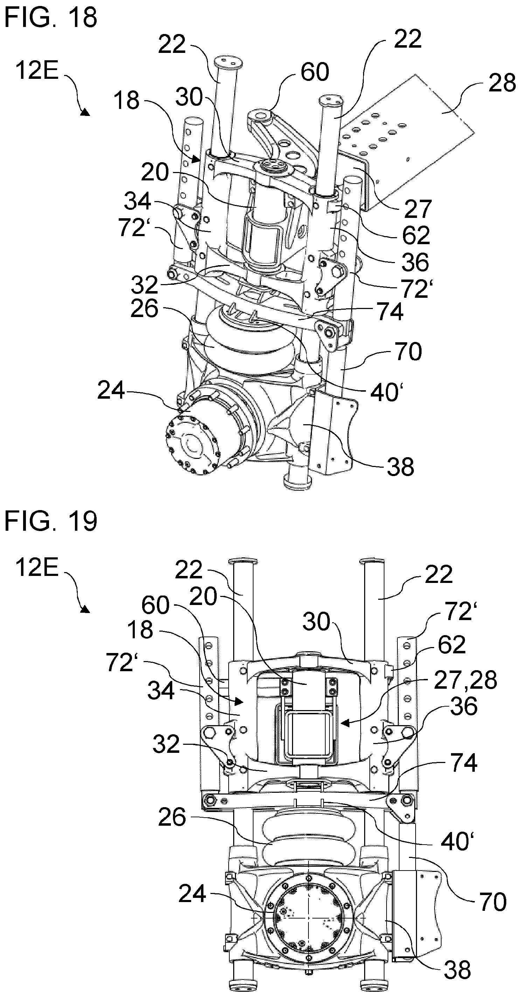

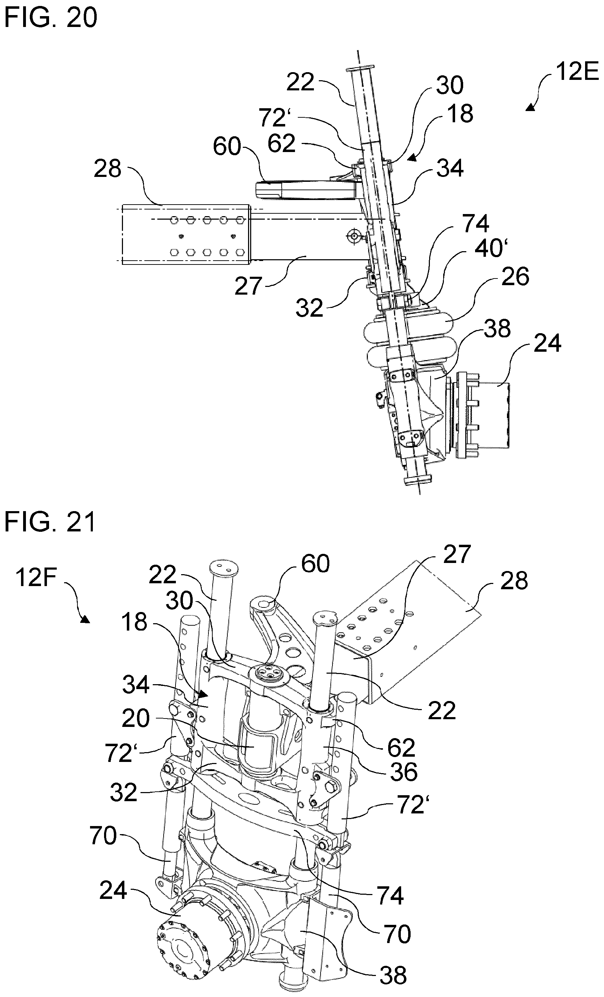

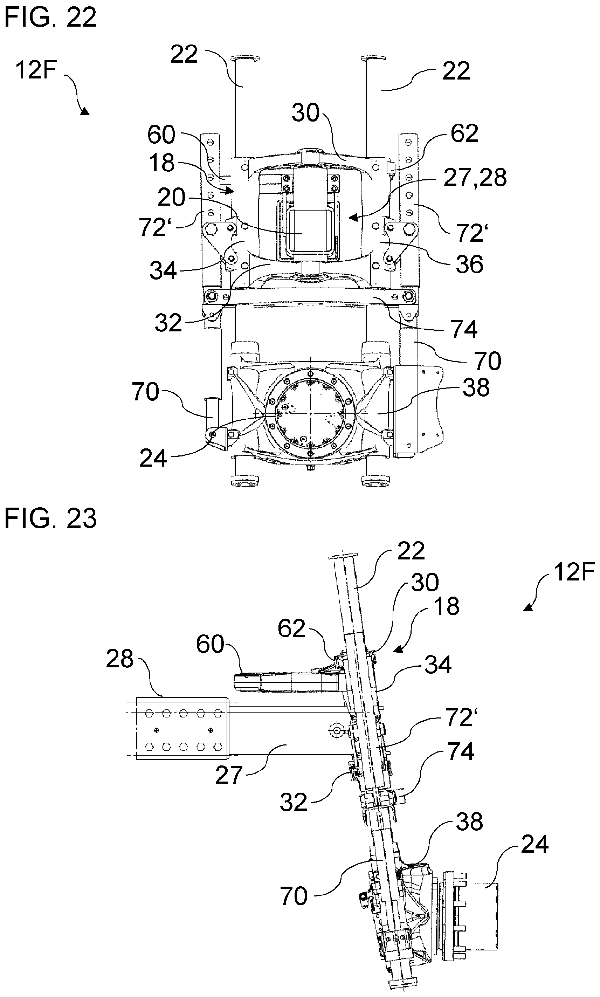

Die Figuren 18 bis 20 zeigen ein weiteres Ausführungsbeispiel für eine Einzelradaufhängung 12E (keine Ausführungsform der vorliegenden Erfindung). Die Einzelradaufhängung 12E der Figuren 18 bis 20 kombiniert Merkmale der Einzelradaufhängung 12C der Figuren 12 bis 14 mit Merkmalen der Einzelradaufhängung 12D der Figuren 15 bis 17, wobei nur eine Dämpfereinrichtung 70 umfasst ist. Die Figuren 21 bis 23 zeigen ein weiteres Ausführungsbeispiel für eine Einzelradaufhängung 12F (keine Ausführungsform der vorliegenden Erfindung). Die Einzelradaufhängung 12F der Figuren 21 bis 23 ist ähnlich zu der Einzelradaufhängung 12C der Figuren 12 bis 14, wobei die Höhenverstelleinrichtungen 72' als mechanische Arretierungen ausgeführt sind.

### Bezugszeichenliste

| | | | |
|---|---|---|---|
| 10 | Mobile Landmaschine | 48 | Erste Spannbuchse |
| 12(A-F) | Einzelradaufhängung | 50 | Zweite Spannbuchse |
| 14 | Vorderachse | 52 | Erste Spanneinrichtung |
| 16 | Hinterachse | 54 | Zweite Spanneinrichtung |
| 18 | Tragvorrichtung | 56 | Loch |
| 20 | Lenksäule | 58 | Loch |
| 22 | Führungssäule | 60 | Lenkarm |
| 24 | Radnabe | 62 | Lenkzylinder-Flanschabschnitt |
| 26 | Federeinrichtung | 64 | Leitungsführung |
| 27 | Verschiebeteil | 66 | Spurbreiteneinstelleinrichtung |
| 28 | Rahmenteil | 68 | Linearantrieb |
| 30 | Erster Querträger | 70 | Dämpfereinrichtung |
| 32 | Zweiter Querträger | 72 | Höhenverstelleinrichtung |
| 32A-B | Gurt/Band | 74 | Träger |
| 34 | Erster Verbindungsträger | | |
| 36 | Zweiter Verbindungsträger | | |
| 38 | Führungsschlitten | L | Lenkachse |
| 40 | Verbindungselement | M | Führungssäule/Verbindungsträger-Mittellängsachse |
| 42 | Erste Flanschfläche | F | Federeinrichtung-Mittellängsachse |
| 44 | Zweite Flanschfläche | | |
| 46 | Innenbolzen | | |

## Patentansprüche

1. Mobile Landmaschine (10) aufweisend:
eine lenkbare Einzelradaufhängung (12) für die mobile Landmaschine (10), die lenkbare Einzelradaufhängung aufweisend:
eine Tragvorrichtung (18) zur schwenkbaren Lagerung der Einzelradaufhängung (12) an einem Rahmenteil (28) der Landmaschine (10);
mindestens eine Führungssäule (22), die in der Tragvorrichtung (18) verschiebbar gelagert ist;
eine Radnabe (24), die verschiebbar entlang der mindestens einen Führungssäule (22) geführt ist;
einen Träger (74), der fest mit der mindestens einen Führungssäule (22) zum Bewegen mit der mindestens einen Führungssäule (22) verbunden ist und oberhalb der Radnabe (24) angeordnet ist;
mindestens eine Höhenverstelleinrichtung (72), die an dem Träger (74) befestigt ist;
**dadurch gekennzeichnet, dass** die mindestens eine Höhenverstelleinrichtung (72) die Radnabe (24) höhenverstellbar mit dem Träger (74) verbindet und mindestens einen Linearantrieb, einen Pneumatikzylinder oder einen Hydraulikzylinder aufweist; und
mindestens eine Dämpfereinrichtung (70), die an dem Träger (74) befestigt ist, wobei:
die mindestens eine Dämpfereinrichtung (70) außen auf einer in Fahrtrichtung gewandten Seite der lenkbaren Einzelradaufhängung (12) angeordnet ist; oder
zwei Dämpfereinrichtungen (70) umfasst sind, die an entgegengesetzten Enden des Trägers (74) befestigt sind.

2. Mobile Landmaschine (10) nach Anspruch 1, wobei:
der Träger (74) an der mindestens einen Führungssäule (22) befestigt ist; oder
der Träger (74) integral-einstückig mit der mindestens einen Führungssäule (22) ausgebildet ist, vorzugsweise als Guss-, Schmiede- oder Schweißkonstruktion; oder
die mindestens einen Führungssäule (22) in einer Aufnahme des Trägers (74) eingespannt ist, vorzugweise an einem geschlitzten Ende des Trägers (74).

3. Mobile Landmaschine (10) nach einem der vorherigen Ansprüche, wobei:
die Radnabe (24) bewegbar mit dem Träger (74) verbunden ist; und/oder
der Träger (74) bewegbar mit der Tragvorrichtung (18) verbunden ist; und/oder
ein Abstand zwischen dem Träger (74) und der Radnabe (24) variabel ist, vorzugsweise zur Federung und/oder Dämpfung der Radnabe (24) am Träger (74); und/oder
ein Abstand zwischen dem Träger (74) und der Tragvorrichtung (18) variabel ist, vorzugsweise zur Höheneinstellung der lenkbaren Einzelradaufhängung (12).

4. Mobile Landmaschine (10) nach einem der vorherigen Ansprüche, ferner aufweisend:
eine Federeinrichtung (26), vorzugweise ein Federbalg, die an dem Träger (74) befestigt ist.

5. Mobile Landmaschine (10) nach Anspruch 4, wobei:
die Federeinrichtung (26) zwischen dem Träger (74) und der Radnabe (24) angeordnet ist oder zwischen dem Träger (74) und der Tragvorrichtung (18) angeordnet ist; oder
die Federeinrichtung (26) die Radnabe (24) federnd mit dem Träger (74) verbindet oder den Träger (74) federnd mit der Tragvorrichtung (18) verbindet; oder
die Federeinrichtung (26) unterhalb oder oberhalb des Trägers (74) angeordnet ist.

6. Mobile Landmaschine (10) nach einem der vorherigen Ansprüche, wobei:
die mindestens eine Dämpfereinrichtung im Wesentlichen parallel zu der mindestens einen Führungssäule angeordnet ist; und/oder
die mindestens eine Dämpfereinrichtung (70) den Träger (74) dämpfend mit der Tragvorrichtung (18) verbindet; und/oder
die mindestens eine Dämpfereinrichtung (70) einen Pneumatikzylinder, einen Hydraulikzylinder, einen Gasdruckdämpfer oder einen Stoßdämpfer aufweist.

7. Mobile Landmaschine (10) nach einem der vorherigen Ansprüche, wobei:
die mindestens eine Höhenverstelleinrichtung (72) im Wesentlichen parallel zu der mindestens einen Führungssäule (22) angeordnet ist; und/oder
die mindestens eine Höhenverstelleinrichtung (72) außen an einer in Fahrtrichtung gewandten Seite der lenkbaren Einzelradaufhängung (12) angeordnet ist.

8. Mobile Landmaschine (10) nach einem der vorherigen Ansprüche, wobei:
die mindestens eine Höhenverstelleinrichtung (72) und die mindestens eine Dämpfereinrichtung (70) auf gegenüberliegenden Seiten bezüglich des Trägers (74) angeordnet sind.

## Claims

1. Mobile agricultural machine (10) having:
a steerable independent wheel suspension (12) for the mobile agricultural machine (10), the steerable independent wheel suspension having:
a support device (18) for pivotable mounting of the independent wheel suspension (12) on a frame part (28) of the agricultural machine (10);
at least one guide column (22) which is mounted displaceably in the support device (18);
a wheel hub (24) which is guided displaceably along the at least one guide column (22);
a bracket (74) which is connected fixedly to the at least one guide column (22) so as to move with the at least one guide column (22) and is arranged above the wheel hub (24);
at least one height adjustment means (72) which is fastened to the bracket (74);
**characterized in that**
the at least one height adjustment means (72) connects the wheel hub (24) in height-adjustable fashion to the bracket (74) and has at least one linear drive, one pneumatic cylinder or one hydraulic cylinder; and
at least one damper means (70) which is fastened to the bracket (74), wherein:
the at least one damper means (70) is arranged at the outside on a side, which faces in a direction of travel, of the steerable independent wheel suspension (12); or two damper means (70) are included which are fastened to opposite ends of the bracket (74).

2. Mobile agricultural machine (10) according to Claim 1, wherein:
the bracket (74) is fastened to the at least one guide column (22); or
the bracket (74) is formed integrally in one piece with the at least one guide column (22), preferably as a cast, forged or welded construction; or
the at least one guide column (22) is clamped in a receptacle of the bracket (74), preferably at a slotted end of the bracket (74).

3. Mobile agricultural machine (10) according to any of the preceding claims, wherein:
the wheel hub (24) is connected movably to the bracket (74); and/or
the bracket (74) is connected movably to the support device (18); and/or
a spacing between the bracket (74) and the wheel hub (24) is variable, preferably for spring-mounting and/or damping of the wheel hub (24) on the bracket (74); and/or a spacing between the bracket (74) and the support device (18) is variable, preferably for height adjustment of the steerable independent wheel suspension (12).

4. Mobile agricultural machine (10) according to any of the preceding claims, furthermore having:
a spring means (26), preferably a spring bellows, which is fastened to the bracket (74).

5. Mobile agricultural machine (10) according to Claim 4, wherein:
the spring means (26) is arranged between the bracket (74) and the wheel hub (24) or is arranged between the bracket (74) and the support device (18); or
the spring means (26) connects the wheel hub (24) with spring action to the bracket (74) or connects the bracket (74) with spring action to the support device (18); or the spring means (26) is arranged below or above the bracket (74).

6. Mobile agricultural machine (10) according to any of the preceding claims, wherein:
the at least one damper means is arranged substantially parallel to the at least one guide column; and/or the at least one damper means (70) connects the bracket (74) with damping action to the support device (18); and/or
the at least one damper means (70) has a pneumatic cylinder, a hydraulic cylinder, a gas pressure damper or a shock damper.

7. Mobile agricultural machine (10) according to any of the preceding claims, wherein:
the at least one height adjustment means (72) is arranged substantially parallel to the at least one guide column (22); and/or
the at least one height adjustment means (72) is arranged at the outside on a side, which faces in a direction of travel, of the steerable independent wheel suspension (12).

8. Mobile agricultural machine (10) according to any of the preceding claims, wherein:
the at least one height adjustment means (72) and the at least one damper means (70) are arranged on opposite sides in relation to the bracket (74).

## Revendications

1. Machine agricole mobile (10) présentant :
une suspension de roue individuelle orientable (12) pour la machine agricole mobile (10), la suspension de roue individuelle orientable comportant :
un dispositif de support (18) pour le montage pivotant de la suspension de roue individuelle (12) sur une partie de châssis (28) de la machine agricole (10) ;
au moins une colonne de guidage (22) montée mobile dans le dispositif de support (18) ;
un moyeu de roue (24) qui est guidé de manière à pouvoir coulisser le long de la colonne de guidage (22) ;
un support (74), qui est relié de manière fixe à la colonne de guidage (22) pour se déplacer vers la colonne de guidage (22) et est disposé au-dessus du moyeu de roue (24) ;
au moins un dispositif de réglage en hauteur (72) qui est fixé au support (74) ;
**caractérisée en ce que**
le ou les dispositifs de réglage en hauteur (72) relient le moyeu de roue (24) au support (74) de manière réglable en hauteur et présentent au moins un entraînement linéaire, un vérin pneumatique ou un vérin hydraulique ; et
au moins un dispositif amortisseur (70) qui est fixé au support (74), dans lequel :
le ou les dispositifs amortisseurs (70) sont disposés à l'extérieur sur un côté de la suspension de roue individuelle orientable (12) tourné dans le sens de marche ; ou
deux dispositifs amortisseurs (70) sont fixés aux extrémités opposées du support (74).

2. Machine agricole mobile (10) selon la revendication 1, dans laquelle :
le support (74) est fixé à au moins une colonne de guidage (22) ; ou
le support (74) est formé d'une seule pièce avec la colonne de guidage (22), de préférence sous forme de construction coulée, forgée ou soudée ; ou
la colonne de guidage (22) est serrée dans un logement du support (74), de préférence au niveau d'une extrémité fendue du support (74).

3. Machine agricole (10) selon l'une quelconque des revendications précédentes, dans laquelle :
le moyeu de roue (24) est relié mobile au support (74) ; et/ou
le support (74) est relié mobile au dispositif de support (18) ; et/ou
une distance entre le support (74) et le moyeu de roue (24) est variable, de préférence pour la suspension et/ou l'amortissement du moyeu de roue (24) sur le support (74) ; et/ou
une distance entre le support (74) et le dispositif de support (18) est variable, de préférence pour le réglage en hauteur de la suspension de roue individuelle orientable (12).

4. Machine agricole mobile (10) selon l'une quelconque des revendications précédentes, comprenant en outre :
un dispositif à ressort (26), de préférence un soufflet à ressort, qui est fixé au support (74).

5. Machine agricole mobile (10) selon la revendication 4, dans laquelle :
le dispositif à ressort (26) est disposé entre le support (74) et le moyeu de roue (24) ou entre le support (74) et le dispositif de support (18) ; ou
le dispositif à ressort (26) relie élastiquement le moyeu de roue (24) au support (74) ou relie élastiquement le support (74) au dispositif de support (18) ; ou
le dispositif à ressort (26) est disposé au-dessous ou au-dessus du support (74).

6. Machine agricole (10) selon l'une quelconque des revendications précédentes, dans laquelle :
le ou les dispositifs amortisseurs sont disposés sensiblement parallèlement à la ou aux colonnes de guidage ; et/ou
le ou les dispositifs amortisseurs (70) relient le support (74) au dispositif de support (18) de manière amortissante ; et/ou
le dispositif amortisseur (70) comprend un vérin pneumatique, un vérin hydraulique, un amortisseur à pression de gaz ou un amortisseur de chocs.

7. Machine agricole (10) selon l'une quelconque des revendications précédentes, dans laquelle :
le ou les dispositifs de réglage en hauteur (72) sont disposés sensiblement parallèlement à la ou aux colonnes de guidage (22) ; et/ou
le ou les dispositifs de réglage en hauteur (72) sont disposés à l'extérieur sur un côté de la suspension de roue individuelle orientable (12) tourné dans le sens de marche.

8. Machine agricole (10) selon l'une quelconque des revendications précédentes, dans laquelle :
le ou les dispositifs de réglage en hauteur (72) et le ou les dispositifs amortisseurs (70) sont disposés sur des côtés opposés par rapport au support (74).
